# EUROPEAN PATENT APPLICATION

(11) **EP 4 814 809 A2**
(43) Date of publication of application: **30.09.2026**
(21) Application number: 26166179.7
(22) Date of filing: 19.03.2026
(51) Int. Cl.: G06N 10/70

(54) **DECODING FOUR-DIMENSIONAL TORIC CODE FOR A QUANTUM COMPUTER**

(30) Priority: 28.03.2025 US 202519093429
(71) Applicant: Microsoft Technology Licensing, LLC, Redmond, WA 98052 (US)
(72) Inventor: AASEN, David, Redmond, 98052 (US); HASTINGS, Matthew B, Redmond, 98052 (US); HAAH, Jeongwan, Redmond, 98052 (US)
(74) Representative: CMS Cameron McKenna Nabarro Olswang LLP

(57) **Abstract**

Aspects of the disclosure include a method for determining and correcting an error in measurement outcomes from a quantum circuit. Aspects include receiving, from the quantum circuit, output of the measurement outcomes for a four-dimensional (4D) toric code and determining a flux loop from the measurement outcomes, where the flux loop corresponds to a 4D torus. Aspects include transforming the flux loop into a 4D covering space by fixing a base point of the flux loop in the 4D covering space, where a 4D bounding box is generated that encloses the flux loop in 4D covering space. Aspects include shrinking the 4D bounding box enclosing the flux loop by decreasing a size of the bounding box, where the shrinking continues until the 4D bounding box surrounds a single plaquette, where a pattern of errors correspond to the single plaquette. The pattern of errors corresponding to the single plaquette is corrected.

## Description

### INTRODUCTION

The subject disclosure relates to quantum circuits, and particularly to a quantum computer and computer-implemented methods for decoding four-dimensional (4D) (2,2) toric code for execution on a quantum computer.

A quantum computer is a physical machine configured to execute logical operations based on or influenced by quantum-mechanical phenomena. Such logical operations may include, for example, mathematical computation. Current interest in quantum-computer technology is motivated by analysis suggesting that the computational efficiency of an appropriately configured quantum computer may surpass that of any practicable non-quantum computer when applied to certain types of problems. Such problems include computer modeling of natural and synthetic quantum systems, predicting the behavior of new molecules and materials, integer factorization, and machine learning. Furthermore, it has been predicted that continued miniaturization of conventional computer logic structures will ultimately lead to the development of nanoscale logic components that exhibit quantum effects and should therefore be addressed according to quantum-computing principles.

### SUMMARY

Embodiments are directed to methods for determining and correcting an error in measurement outcomes from a quantum circuit. A non-limiting method includes receiving, from the quantum circuit, output of the measurement outcomes for a four-dimensional (4D) toric code. The method includes determining a flux loop from the measurement outcomes, where the flux loop corresponds to a 4D torus and transforming the flux loop to a 4D covering space by fixing a base point of the flux loop in the 4D covering space, where a 4D bounding box is generated that encloses the flux loop in the 4D covering space. The method includes shrinking the 4D bounding box enclosing the flux loop by decreasing a size of the bounding box, where the shrinking continues until the 4D bounding box surrounds a single plaquette, where a pattern of errors correspond to the single plaquette. The method includes correcting the pattern of errors corresponding to the single plaquette.

According to one or more embodiments, a non-limiting method for determining and correcting an error in measurement outcomes from a quantum circuit is provided. The method include receiving, from the quantum circuit, output of the measurement outcomes for a four-dimensional (4D) toric code. The method includes performing a recursive routine to decode the 4D toric code by searching for elementary faults in the measurement outcomes, where a stabilizer violation corresponds to each of the elementary faults. The recursive routine includes storing a pattern of violated stabilizers found in the measurement outcomes, where a first array comprises one entry for each of the elementary faults, where the entry indicates the pattern of violated stabilizers caused by a given elementary fault of the elementary faults, where a second array comprises a fixing pattern to fix the given elementary fault. Also, the recursive routine includes searching for patterns of the elementary faults in the measurement outcomes up to a maximum depth, where the maximum depth is a total weight plus one, where the searching is performed for the patterns of the elementary faults having a fault number greater than a starting fault number. Further, the recursive routine includes determining a given pattern of the elementary faults in the measurement outcomes as the given elementary fault and decoding the given elementary fault for the measurement outcomes by finding in the second array the fixing pattern to fix the given elementary fault. Also, the method includes causing the given elementary fault to be fixed.

The above features and advantages, and other features and advantages of the disclosure are readily apparent from the following detailed description when taken in connection with the accompanying drawings. This Summary is provided to introduce in simplified form a selection of concepts that are further described in the Detailed Description. This Summary is not intended to identify key features or essential features of the claimed subject matter, nor is it intended to be used to limit the scope of the claimed subject matter. The claimed subject matter is not limited to implementations that solve any or all disadvantages noted in any part of this disclosure.

### BRIEF DESCRIPTION OF THE DRAWINGS

The specifics of the exclusive rights described herein are particularly pointed out and distinctly claimed in the claims at the conclusion of the specification. The foregoing and other features and advantages of the embodiments of the invention are apparent from the following detailed description taken in conjunction with the accompanying drawings in which:
FIG. 1 depicts an example quantum computer configured to execute quantum-logic operations in accordance with one or more embodiments;
FIG. 2 depicts an illustration of a Bloch sphere that provides a graphical description of some quantum mechanical aspects of an individual qubit in accordance with one or more embodiments;
FIG. 3 is a graph of example signal levels and associated durations to assert a quantum-gate operation on one or more qubits of a quantum circuit in accordance with one or more embodiments;
FIG. 4 depicts a block diagram of a classical computer system according to one or more embodiments;
FIG. 5 depicts a flowchart of a method for a decoder for determining and correcting errors in measurement outcomes from a quantum computer in accordance with one or more embodiments;
FIGS. 6A and 6B depict a flowchart of a method for a decoder for determining and correcting errors in measurement outcomes from a quantum computer in accordance with one or more embodiments;
FIG. 7 depicts an example of single shot decoding to close a flux loop in accordance with one or more embodiments;
FIG. 8 depicts an example of minimum weight matching of flux loops in a five-dimensional (5D) lattice in accordance with one or more embodiments;
FIG. 9 depicts an example of lifting the 4D torus to a 4D covering space in accordance with one or more embodiments; and
FIGS. 10A and 10B depict an example decoder algorithm in accordance with one or more embodiments.

The diagrams depicted herein are illustrative. There can be many variations to the diagram or the operations described therein without departing from the spirit of the invention. For instance, the actions can be performed in a differing order or actions can be added, deleted or modified.

In the accompanying figures and following detailed description of the described embodiments of the invention, the various elements illustrated in the figures are provided with two or three-digit reference numbers. With minor exceptions, the leftmost digit(s) of each reference number corresponds to the figure in which its element is first illustrated.

### DETAILED DESCRIPTION

In accordance with one or more embodiments, a system, a method, a classical computer coupled to a quantum computer, and/or a quantum computer are configured and arranged to provide for decoding four-dimensional (4D) (2,2) toric code for execution on a quantum computer. Errors in measurement outcomes are found or decoded, and those errors are corrected. In one or more embodiments, the decoder uses an efficient tree pruning algorithm to run quickly, along with several machine level optimizations. In one or more embodiments, the decoder uses a uses a novel lifting of a 4D torus to a cover space R⁴ to implement the decoder for the rotated 4D toric code.

As technical effects and technical solutions, one or more embodiments improve the functioning and/or operation of the quantum computer itself. Technical effects and benefits of the decoders presented herein are to provide fast and accurate decoding. In a quantum computer (or quantum computational device), the decoder must operate quickly so that the decode (e.g., decoding information) is available while the quantum device is running. Although there may be leeway in how fast the decode needs to be, in some cases the decoding is to be completed before the quantum computer does its next step, or perhaps quantum computer can wait a short time. Nevertheless, these decodes need to happen rapidly. As such, decoders are provided that are able to do these decodes quickly enough while still maintaining accuracy. Further, the present disclosure improves the functioning of a quantum computer by finding qubit errors in measurement outcomes and correcting the qubit errors of qubits on the quantum computer by applying instructions to change the states of the qubits having the qubit errors. Because the states of qubits of the quantum computer have been corrected with the decoded information, instructions are provided to the quantum computer to cause quantum operations on the qubits that have been corrected, which then causes the corrected qubits to output further measurement outcomes based on the corrected states. This improves the functioning and/or operation of the quantum computer because the (subsequent) quantum operations are based on qubits in correct states, and prevents subsequent measurement outcomes from being based on incorrect states of qubits.

### Definitions:

A quantum error-correcting code is defined by an isometric linear map from a Hilbert space of k qubits, called logical qubits, to a larger Hilbert space of n qubits, called the physical qubits of the code, for some integers k and n with n>k. A stabilizer quantum error correcting code is an error correcting code where the image of this map is the joint eigenspace of n-k independent, mutually commuting operators, termed stabilizers, each of which is a product of Pauli operators on one or more physical qubits.

A Calderbank, Shor, and Steane (CSS) stabilizer quantum error-correcting code is a stabilizer quantum error correcting code where each stabilizer is a product of either Pauli X operators on some qubits, or Pauli Z operators, but not both.

Surface codes are a type of quantum error-correcting code that arranges qubits on a two-dimensional (2D) grid. Surface codes are known for their high fault-tolerance and ability to correct errors that occur during quantum computations.

The toric code is a topological quantum error-correcting code, and an example of a stabilizer code, defined on a two-dimensional spin lattice. The toric code may be the most well studied of the quantum double models. Topology is the branch of mathematics that studies the properties of objects that do not change under smooth deformations, one classic example being the number of holes in a torus.

A four-dimensional (4D) code, in the context of quantum computing, refers to a quantum error-correcting code that is defined on a four-dimensional lattice. The 4D code is an extension of lower-dimensional topological codes, such as the 2D toric code, and are used to protect quantum information from errors by exploiting the properties of higher-dimensional topological spaces.

A decoder is a component of a quantum error correction system whose primary function is to interpret the results of error syndrome measurements and determine the appropriate corrective actions to restore the quantum state to its intended form. Quantum computers are susceptible to errors due to decoherence, noise, and other quantum phenomena, making error correction essential for reliable quantum computation. Aspects of a decoder in quantum computing may include: 1) Error Detection: the decoder analyzes the syndrome bits, which are the outcomes of measurements on stabilizer operators. These measurements indicate whether and where errors have occurred in the quantum system. 2) Error Diagnosis: based on the pattern of syndrome bits, the decoder identifies the type and location of errors. This involves determining which qubits have been affected and what kind of errors (e.g., bit-flip, phase-flip) have occurred. 3) Error Correction: once the errors are diagnosed, the decoder determines the corrective operations needed to restore the quantum state. These operations are typically quantum gates applied to the affected qubits to reverse the errors. 4) Fault Tolerance: a good decoder is designed to be fault-tolerant, meaning it can handle a wide range of error types and magnitudes without compromising the integrity of the quantum information. The decoder is able to correct errors even in the presence of additional noise or imperfections in the error correction process itself. 5) Examples of Decoding Algorithms: Various decoding algorithms have been developed for different types of quantum error correcting codes. For example, the minimum weight perfect matching algorithm is commonly used for decoding surface codes, while belief propagation and neural network-based decoders are being explored for other types of codes.

In the context of quantum error correction and topological quantum codes, such as the toric code, the terms "0-chain," "1-chain," and "2-chain" refer to mathematical constructs used to describe collections of elements (such as vertices, edges, faces, or cells) in a lattice.
(A) 0-Chain: a 0-chain refers to a formal sum of vertices (or 0-dimensional elements) in a lattice. It is a mathematical construct used to describe configurations of vertices in a lattice, where each vertex is assigned a coefficient, typically from a finite field like ${ℤ}_{2}$ (the integers modulo 2). This means each vertex is either included (coefficient 1) or not included (coefficient 0) in the chain. In quantum error correction, 0-chains can be used to represent certain types of error syndromes or configurations. For example, in a 2D toric code, a 0-chain might represent a set of vertices where measurement outcomes indicate the presence of errors. The task of the decoder is to interpret these 0-chains to determine the appropriate corrective actions to restore the quantum state to its intended form.
(B) 1-Chain: a 1-chain is a formal sum of edges (or 1-dimensional elements) in a lattice. In the context of a quantum code, a 1-chain can represent a set of edges that are involved in a particular configuration, such as a set of qubits that have experienced errors. In a 1-chain, each edge is assigned a coefficient, typically from a finite field like ${ℤ}_{2}$ (the integers modulo 2). This means each edge is either included (coefficient 1) or not included (coefficient 0) in the chain. 1-chains are used to describe error patterns or syndromes in quantum error-correcting codes. For example, a 1-chain might represent the set of edges where bit-flip errors have occurred.
(C) 2-Chain: a 2-chain is a formal sum of faces (or 2-dimensional elements) in a lattice. In the context of a quantum code, a 2-chain can represent a set of faces that are involved in a particular configuration, such as a set of stabilizer operators that detect errors. Similar to 1-chains, each face in a 2-chain is assigned a coefficient from a finite field, indicating whether the face is included in the chain. 2-chains are used to describe surfaces or boundaries in the lattice. For example, a 2-chain might represent the boundary of a region where errors have been detected.

Hamming weight refers to the number of non-zero elements (typically represented as 1s) in a binary string or vector. In the context of quantum error correction, the Hamming weight of an error pattern indicates the number of qubits that have been affected by errors. In quantum computing, minimum weight refers to the smallest number of qubits that need to be flipped (e.g., changed from 0 to 1 or vice versa) to represent an error in a quantum error-correction code, essentially indicating the least significant change needed to detect and correct an error within the system. For error detection, when a quantum system experiences errors due to noise, the "weight" of an error refers to how many qubits are affected. Quantum error correction codes are designed to identify and correct errors by analyzing the syndrome bits (pattern of flipped qubits). Accordingly, the minimum weight of a code is important because the minimum weight signifies the smallest possible change that can be detected, allowing for more efficient error correction.${ℝ}^{4}$ refers to a four-dimensional (4D) Euclidean space, which is a mathematical construct used to describe a space with four dimensions, each of which is a real number.

*T*⁴ refers to a four-dimensional torus. *T*⁴ is the 4D torus itself. *T*⁴ is given by tuples of real numbers {x,y,z,w} with the identifications x~x+1, y~y+1, z~z+1, and w~w+1.

A covering map in the context of ${ℝ}^{4} \to {T}^{4}$ indicates a mathematical function that maps points from the four-dimensional Euclidean space ${ℝ}^{4}$ to a four-dimensional torus *T*⁴. A covering map is a continuous function that covers the target space in a way that locally resembles a projection. A covering map is a concept from topology, a branch of mathematics. It refers to a continuous function between two topological spaces that maps one space (the "covering space") onto another space (the "base space") in such a way that each point in the base space has a neighborhood that is evenly covered by the covering space. This means that the pre-image of each point in the base space consists of a discrete set of points in the covering space, and locally around each point, the map looks like a projection from a product space. In the context of quantum computing and topological quantum error correction, a covering map can be used to describe how a higher-dimensional space (such as ${ℝ}^{4}$) is related to a lower-dimensional space with periodic boundary conditions (such as a 4D torus *T*⁴). The covering map allows for the representation of complex topological structures and is useful for visualizing and analyzing the properties of quantum codes defined on these spaces.

In the context of quantum computing and topological quantum error correction, "flux loops" refer to closed loops of magnetic or electric flux that can occur in certain types of quantum systems, particularly those involving topological phases of matter. These flux loops are often used to describe error configurations or excitations in topological quantum codes. In topological quantum error-correcting codes, such as the toric code or surface code, qubits are arranged on a lattice, and errors can be represented as excitations that form flux loops or strings on this lattice. Error Representation: flux loops can represent errors in the system. For example, in a toric code, a flux loop of flipped qubits (bit-flip errors) can create a closed flux loop of excitations. These flux loops are topological defects that can be detected and corrected by the code. Stabilizer Violations: in the context of stabilizer codes, flux loops correspond to violations of stabilizer conditions. The presence of a flux loop indicates that certain stabilizer operators have measured unexpected outcomes, signaling the presence of errors.

A membrane refers to a two-dimensional (2D) surface or 2-chain in a higher-dimensional space, such as ${ℝ}^{4}$, that serves as a boundary for a given configuration of flux loops. A membrane is essentially a 2-chain, which is a formal sum of faces (or 2-dimensional elements) in a lattice. In this context, the membrane represents a surface that can be used to enclose or bound a set of flux loops.

A syndrome refers to the set of measurement outcomes obtained from checking the stabilizer operators of a quantum error-correcting code. The syndrome provides information about the presence and location of errors in the quantum state without directly measuring or disturbing the encoded quantum information, essentially acting as a hint about where an error has occurred without directly disturbing the encoded quantum information itself, allowing for error correction techniques to be applied. The syndrome is typically obtained through "syndrome measurements" performed on auxiliary qubits (which are called ancilla qubits) entangled with the data qubits. Stabilizer Operators: in many quantum error-correcting codes, such as stabilizer codes, a set of stabilizer operators is defined. These stabilizer operators are typically products of Pauli operators (X, Y, Z) and are designed to commute with the logical operators that define the encoded quantum information. Error Detection: when a stabilizer operator is measured, the result is either +1 or -1. A result of +1 indicates that the quantum state is within the code space defined by the stabilizer, while a result of -1 indicates that an error has occurred. The collection of these measurement results forms the syndrome. Syndrome Bits: the measurement outcomes (e.g., either +1 or -1) are often converted into binary values, represented as bits (0 or 1). These binary values are the syndrome bits. A syndrome bit of 0 typically corresponds to a +1 measurement outcome, indicating no error, while a syndrome bit of 1 typically corresponds to a -1 outcome, indicating an error. Error Diagnosis: the pattern of syndrome bits provides information about the type and location of errors in the quantum state. By analyzing the syndrome, a decoder can determine which qubits have been affected by errors and what corrective actions are needed. During the decoding process, once the syndrome is obtained, the syndrome is analyzed to determine the most likely location and type of error that occurred, allowing for corrective actions to be taken. Error Correction: once the errors are diagnosed using the syndrome, corrective operations (e.g., quantum gates) are applied to the affected qubits to restore the quantum state to its intended form. This process is known as error correction. Fault Tolerance: syndromes are crucial for achieving fault tolerance in quantum computing. They allow errors to be detected and corrected without directly measuring the quantum information, preserving the coherence and entanglement necessary for quantum computation.

In the context of quantum error correction, an elementary fault refers to a basic error that can occur in a quantum system, typically affecting a single qubit or a small, localized group of qubits. Each elementary fault corresponds to a specific type of error, such as a bit-flip, phase-flip, or a combination of both, and is associated with a violation of stabilizer conditions in a quantum error-correcting code. Elementary faults are the fundamental building blocks of more complex error patterns. In a decoding process, the goal is to identify and correct these elementary faults to restore the quantum state to its intended form. The decoder analyzes the measurement outcomes, or syndrome bits, to detect stabilizer violations, which indicate the presence and location of elementary faults. By determining the pattern of these faults, the decoder can apply corrective operations to the affected qubits, thereby mitigating the errors and preserving the integrity of the quantum information.

In quantum error correction, particularly with stabilizer codes like the toric code, the dual lattice is used to represent the complementary set of stabilizers or errors. For example, in a 2D toric code, the original lattice might represent bit-flip errors (X errors), while the dual lattice represents phase-flip errors (Z errors).

A standard cubic lattice for quantum computing denotes qubits that are arranged in a three-dimensional (3D) grid or a four-dimensional (4D) grid where each qubit is equidistant from its neighbors. The 3D or 4D cubic lattice is useful for organizing qubits and implementing quantum error correction.

A rotated cubic lattice in quantum computing refers to a specific arrangement of qubits in a 3D grid or 4D grid that has been rotated to optimize certain properties or operations. Rotating the 3D or 4D cubic lattice can help in optimizing the connectivity and interactions between qubits and reducing the number of qubits needed to operate the code. This can be particularly useful for certain quantum algorithms and error correction schemes. Rotated cubic lattices can be used to improve the efficiency of quantum gates and operations. For example, by rotating the lattice, one can reduce the distance between interacting qubits, which can lead to faster and more reliable quantum operations. In the context of quantum error correction, rotated lattices can help in implementing more efficient error-correcting codes. The rotation can align the qubits in a way that simplifies the detection and correction of errors.

A space group symmetry refers to the symmetrical properties of a crystal within the Hilbert space of a quantum system. These symmetries can be leveraged to enhance quantum error correction and simplify quantum operations.

In the context of quantum error-correcting codes, 1-cells, 2-cells, and 3-cells refer to elements used in the construction of topological quantum codes, such as the surface code. These topological codes are designed to protect quantum information from errors due to decoherence and other quantum noise. 1-cells: these are the edges of the lattice in a topological quantum code. Each 1-cell represents a physical qubit that can be in a superposition of states. In the surface code, these qubits are placed on the edges of a 2D lattice. 2-cells: these are the faces of the lattice, which can be thought of as plaquettes. In the surface code, each 2-cell is associated with a stabilizer operator that checks for errors. There are typically two types of stabilizers: one for checking bit-flip errors (X-stabilizers) and one for phase-flip errors (Z-stabilizers). 3-cells: in some topological codes, such as the 3D color code, 3-cells represent volumes or cells in a 3D lattice. These codes extend the concepts of 1-cells and 2-cells to three dimensions, providing additional robustness against errors. These elements work together to detect and correct errors in a quantum system, ensuring the integrity of the quantum information being processed.

In quantum computing, an "ancilla" (short for "ancillary qubit") refers to an additional qubit used to assist in the computation or to facilitate certain operations. Ancilla qubits are not part of the primary set of qubits that encode the main quantum information or perform the primary computation. Instead, they are used as auxiliary resources to help implement quantum gates, perform error correction, or carry out specific algorithms. Ancilla qubits can serve various purposes, including: facilitating quantum gates, error correction, state preparation and measurement, algorithmic assistance, etc.

The terms primary qubits, main qubits, data qubits, systems qubits, etc., may be utilized interchangeably. The primary qubits are the main qubits that hold the quantum information and are used to perform the core computations of a quantum algorithm. They are the qubits on which the primary quantum gates and operations are applied. The primary qubits or data qubits refer to the main qubits that encode the quantum information and perform the primary computation in a quantum algorithm. In addition to holding the quantum information, the primary qubits are directly involved in the execution of quantum operations and algorithms. The primary qubits represent the logical states and are the primary focus of the computation. The primary qubits are distinct from ancilla qubits, which serve auxiliary roles.

Instruction set architecture: The instruction set architecture (ISA) is the hardware-software interface. As long as hardware faithfully implements the ISA and software is used to express programs in terms of the ISA operations, one skilled in the art can assemble hardware and software and expect correct executions of a program. Like classical computers, quantum computers include a set of software components such as the compiler and runtime that drive the execution of a program and hardware that implements the software instructions. Quantum hardware could include instruction decoding and issue, instruction execution and measurement processing, and implementation of the logical qubit and components such as magic state distillation and the low-level qubit control systems. The ISA draws the boundary between these software and hardware components.

Quantum gates represent the operations that can be performed on qubits. A universal gate set is a set of these quantum gates that enable universal quantum computation, which means that all possible operations are enabled. The gates included in this set include both Clifford gates and non-Clifford gates.

A code block refers to a set of qubits that are used together to encode quantum information in a way that protects the quantum information from errors. In a quantum error correcting code, a block of physical qubits is used to encode a smaller number of logical qubits. In the Shor code, 9 physical qubits are utilized to encode 1 logical qubit.

A code patch is defined as a section of the two-dimensional (2D) grid that encodes a logical qubit. Each code patch includes multiple physical qubits that work together to protect the quantum information from errors. The group of physical qubits is encoded into a logical qubit such that the logical qubits are represented by these patches. The edges of the patches correspond to logical Pauli operators, which are used to perform quantum operations
Quantum compiling fills the gap between the computing layer of high-level quantum algorithms and the layer of physical qubits with their specific properties and constraints. Quantum compiling is a hybrid between the general-purpose compilers of computers, transforming high-level language to assembly language and hardware synthesis by hardware description language, where functions are automatically synthesized into customized hardware. Quantum computation takes place at its lowest level by means of physical operations described by unitary matrices acting on the state of qubits. The computation is achieved as circuits of quantum gates, which are ordered sequences of unitary operators, acting on a few qubits at once.

There is a family of Abelian topological Calderbank-Shor-Steane (CSS) stabilizer codes whose generators are few body X-type and Z-type Pauli strings associated to the stars and plaquettes, respectively, of a cellulation of a two-dimensional surface (with a qubit located at each edge of the cellulation). Toric code often either refers to the construction on the two-dimensional torus and/or is an alternative name for the general construction. The construction on surfaces with boundaries is often called the planar code. Codewords correspond to ground states of the surface code Hamiltonian, and error operators create or annihilate pairs of anyonic charges or vortices.

Quantum computing can utilize methods that suppress errors in faulty qubits. Quantum error correction is a broad class of techniques that encode "logical" qubits and gates in a subspace of the Hilbert space formed by many more "physical" qubits and gates. The structure of a quantum code has an influence on how logical gates are enacted on the physical qubits, and hence the total size and execution time of a quantum computation.

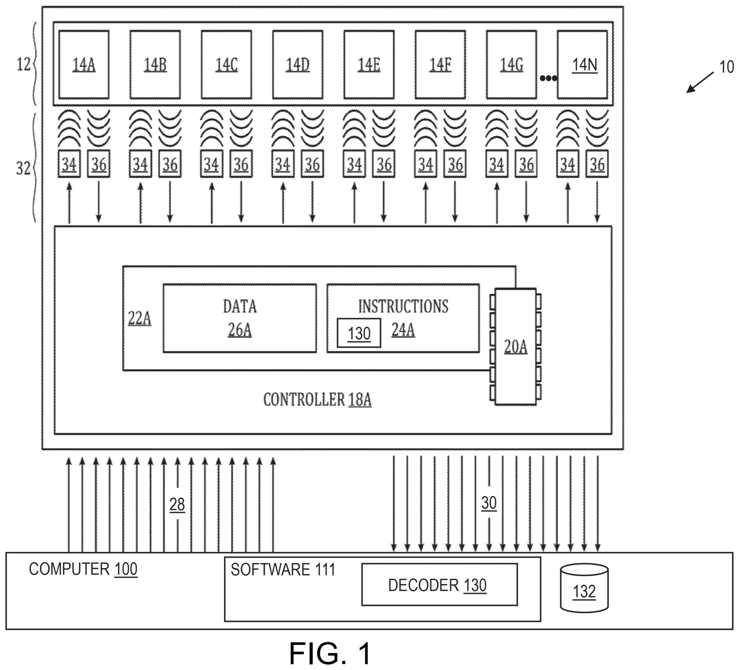

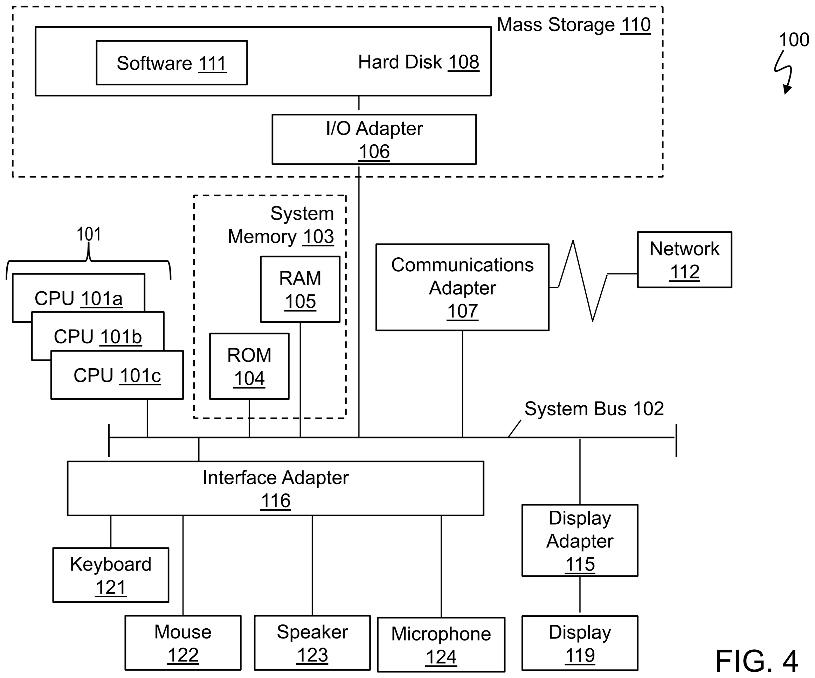

Now turning to an example quantum computer architecture, FIG. 1 illustrates an example quantum computer 10 configured to execute quantum-logic operations. While conventional computer memory holds digital data in an array of bits and enacts bit-wise logic operations, a quantum computer holds data in an array of qubits and operates quantum-mechanically on the qubits in order to implement the desired logic. Accordingly, quantum computer 10 of FIG. 1 includes at least one quantum circuit 12 having an array of physical qubits 14A, 14B, and 14C-14N, where N is the last number of qubits. The qubits 14A-14N can be referred to collectively as qubits 14. The quantum circuit 12 of the array of qubits 14 can be arranged in a lattice structure as depicted in FIG. 4.

The qubits 14 of the quantum circuit 12 take various forms, depending on the desired architecture of the quantum computer 10. According to one or more embodiments, this disclosure relates to neutral atom systems. Further, a qubit alternatively can include: a superconducting Josephson junction, a trapped ion, a trapped atom coupled to a high-finesse cavity, an atom or molecule confined within a fullerene, an ion or neutral dopant atom confined within a host lattice, a quantum dot exhibiting discrete spatial- or spin-electronic states, electron holes in semiconductor junctions entrained via an electrostatic trap, a coupled quantum-wire pair, an atomic nucleus addressable by magnetic resonance, a free electron in helium, a molecular magnet, or a metal-like carbon nanosphere, as non-limiting examples. Additionally, a qubit can include an optically trapped neutral atom such as Cs, Sr, Rb, Yb. More generally, each qubit 14 can include any particle or system of particles that can exist in two or more discrete quantum states that can be measured and manipulated experimentally. For instance, a qubit may be implemented in the plural processing states corresponding to different modes of light propagation through linear optical elements (e.g., mirrors, beam splitters and phase shifters), as well as in states accumulated within a Bose-Einstein condensate.

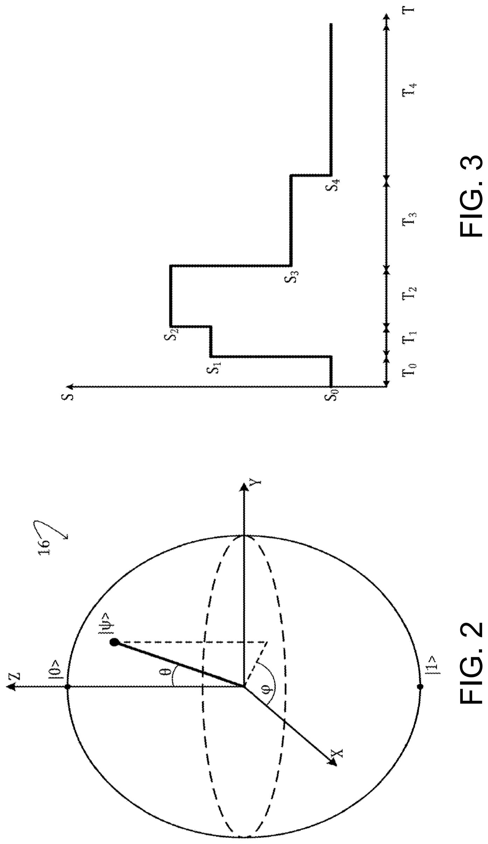

FIG. 2 is an illustration of a Bloch sphere 16 that provides a graphical description of some quantum mechanical aspects of an individual qubit 14. In this description, the north and south poles of the Bloch sphere correspond to the standard basis vectors |0> and |1>, respectively. The set of points on the surface of the Bloch sphere comprise all possible pure states |ψ> of the qubit, while the interior points correspond to all possible mixed states. A mixed state of a given qubit may result from decoherence, which may occur because of undesirable coupling to external degrees of freedom.

Referring to FIG. 1, quantum computer 10 includes a controller 18A. The controller 18A includes at least one processor 20A and associated computer memory 22A. The processor 20A of the controller 18A can be coupled operatively to peripheral componentry, such as network componentry, to enable the quantum computer to be operated remotely. The processor 20A of the controller 18A can take the form of a central processing unit (CPU), a graphics processing unit (GPU), or the like. As such, the controller can include classical electronic componentry. The terms 'classical' and 'non-quantum' are applied herein to any component that can be modeled accurately as an ensemble of particles without considering the quantum state of any individual particle. Classical electronic components include integrated, microlithographed transistors, resistors, and capacitors, for example. The computer memory 22A can be configured to hold program instructions 24A that cause the processor 20A to execute any function or process of the controller. The computer memory can also be configured to hold additional data 26A. In examples in which quantum circuit 12 is a low-temperature or cryogenic device, the controller 18A can include control componentry operable at low or cryogenic temperatures, for example, a field-programmable gate array (FPGA) operated at 77 kelvin (K). In such examples, the low-temperature control componentry can be coupled operatively to interface componentry operable at normal temperatures.

The controller 18A of the quantum computer 10 is configured to receive a plurality of inputs 28 and to provide a plurality of outputs 30. The inputs and outputs can each include digital and/or analog lines. At least some of the inputs and outputs can be data lines through which data is provided to and/or extracted from the quantum computer. Other inputs can include control lines via which the operation of the quantum computer can be adjusted or otherwise controlled. In one or more embodiments, the quantum computer 10 can be coupled a classical computer 100. Further, details of the example classical computer 100 are discussed in FIG. 4.

The controller 18A is operatively coupled to the quantum
circuit 12 via quantum interface 32. The quantum interface 32 is configured to exchange data bidirectionally with the controller 18A. The quantum interface 32 is further configured to exchange signal corresponding to the data bidirectionally with the qubit register. Depending on the architecture of quantum computer 10, such signals may include electrical, magnetic, and/or optical signals. By the signal conveyed through the quantum interface 32, the controller 18A can interrogate and otherwise influence the quantum state held in various qubits 14. For example, the controller 18A can interrogate and otherwise influence the quantum state held in a qubit register, as defined by a collective quantum state of a group of qubits 14. The quantum interface 32 includes at least one modulator 34 and at least one demodulator 36, each coupled operatively to one or more qubits 14 of the quantum circuit 12. In one or more embodiments, a modulator 34 and a demodulator 36 can each be coupled to qubits in a qubit register. Each modulator 34 is configured to output a signal to one or more qubits 14 in the quantum circuit 12 based on modulation data received from the controller 18A. In one or more embodiments, at least one modulator 34 can output a signal to qubits in a qubit register based on modulation data received from the controller 18A. Each demodulator 36 is configured to sense a signal from the one or more qubits 14 of the quantum circuit 12 and to output data to the controller 18A based on the signal. In one or more embodiments, each demodulator 36 is configured to sense a signal from the qubit register and to output data to the controller 18A based on the signal. The data received from the demodulator 36 can, in some examples, be an estimate of an observable to the measurement of the quantum state held in one or more qubits 14 in the quantum circuit 12. In one or more embodiments, the data received from the demodulator 36 can be an estimate of an observable to the measurement of the quantum state held in the qubit register.

In some examples, the modulator 34 can transmit a suitably configured signal to interact physically with one or more qubits 14 of the quantum circuit 12 in order to trigger measurement of the quantum state held in one or more qubits14. The demodulator 36 can then sense a resulting signal released by the one or more qubits 14 pursuant to the measurement and can provide the data corresponding to the resulting signal to the controller 18A. Stated another way, the demodulator 26 is configured to output, based on the signal received, an estimate of one or more observables reflecting the quantum state of one or more qubits of the qubit register, and to furnish the estimate to the controller 18A. In one non-limiting example, the modulator 34 can provide, based on data from the controller 18A, an appropriate voltage pulse or pulse train to an electrode of one or more qubits 14, to initiate a measurement. In short order, the demodulator 36 can sense photon emission from the one or more qubits 14 and can assert a corresponding digital voltage level on a quantum-interface line into the controller 18A. Generally speaking, any measurement of a quantum-mechanical state is defined by the operator "O" corresponding to the observable to be measured; the result "R" of the measurement is guaranteed to be one of the allowed eigenvalues of "O". In the quantum computer 10, "R" is statistically related to the qubit-register state prior to the measurement but is not uniquely determined by the qubit-register state.

Pursuant to appropriate input from the controller 18A, the quantum interface 32 may be configured to implement one or more quantum-logic gates to operate on the quantum state held in the quantum circuit 12, for example, in a qubit register in the quantum circuit 12. Whereas the function of each type of logic gate of a classical computer system is described according to a corresponding truth table, the function of each type of quantum gate is described by a corresponding operator matrix. The operator matrix operates on (i.e., multiplies) the complex vector representing the qubit register state and effects a specified rotation of that vector in Hilbert space.

For example, the Hadamard gate HAD is defined by $HAD = \frac{1}{\sqrt{2}} \left[\begin{matrix}1 & 1 \\ 1 & - 1\end{matrix}\right] .$

The HAD gate acts on a single qubit; it maps the basis state |0 > to $\frac{\left(\left|0\right〉\right)}{\sqrt{2}}$, and maps to |1 > to $\left(\left|0\right〉-\left|1\right〉\right) \sqrt{2}$*.* Accordingly, the HAD gate creates a superposition of states that, when measured, have equal probability of revealing |0 > or |1 >.

The phase gate S is defined by $S = \left[\begin{matrix}1 & 0 \\ 0 & {e}^{\frac{iπ}{2}}\end{matrix}\right] .$

The S gate leaves the basis state |0 > unchanged but maps |1 > to e^{iπ/2}|1>. Accordingly, the probability of measuring either |0 > or |1 > is unchanged by this gate, but the phase of the quantum state of the qubit is shifted. This is equivalent to rotating *ψ* by 90 degrees along a circle of latitude on the Bloch sphere of FIG. 2.

Some quantum gates operate on two or more qubits. The SWAP gate, for example, acts on two distinct qubits and swaps their values. This gate is defined by $SWAP = \left[\begin{matrix}1000 \\ 0010 \\ 0100 \\ 0001\end{matrix}\right] .$

Additionally, the SWAP gate can also be implemented by physically swapping the location of a pair of qubits. The foregoing list of quantum gates and associated operator matrices is non-exhaustive, but is provided for ease of illustration. Other quantum gates include Pauli-X, -Y, and -Z gates, the $\sqrt{NOT}$ gate, additional phase-shift gates, the $\sqrt{SWAP}$ gate, controlled cX, cY, and cZ gates, and the Toffoli, Fredkin, Ising, and Deutsch gates, as non-limiting examples.

Continuing in FIG. 1, suitably configured signals
from modulators 34 of the quantum interface 32 can interact physically with one or more qubits 14 of the quantum circuit 12, for example, a qubit register in the quantum circuit 12, so as to assert any desired quantum-gate operation. As noted above, the desired quantum-gate operations are specifically defined rotations of a complex vector representing the qubit register state. In order to effect a desired rotation "O", one or more modulators of quantum interface 32 can apply a predetermined signal level Sᵢ for a predetermined duration Tᵢ. In some examples, plural signal levels can be applied for plural sequenced or otherwise associated durations, as depicted in FIG. 3, to assert a quantum-gate operation on one or more qubits of the quantum circuit 12, for example, in a qubit register of the quantum circuit 12. In general, each signal level Sᵢ and each duration Tᵢ is a control parameter adjustable by appropriate programming of controller 18A.

The term 'oracle' is used herein to describe a predetermined sequence of elementary quantum-gate and/or measurement operations executable by quantum computer 10. An oracle can be used to transform the quantum state of qubits 14 in the quantum circuit 12, for example, qubits in a qubit register, to effect a classical or non-elementary quantum-gate operation or to apply a density operator, for example. In some examples, an oracle may be used to enact a predefined 'black-box' operation *f*(*x*), which may be incorporated in a complex sequence of operations. To ensure adjoint operation, an oracle mapping n input qubits |*x* > to m output or ancilla qubits |*y > f*(*x*) may be defined as a quantum gate *O*(|*x* > ⊗|y>) operating on the n+m qubits. In this case, *O* can be configured to pass the n input qubits unchanged but combine the result of the operation f(x) with the ancillary qubits via an XOR operation, such that *O*(|*x >* ⊗t>)=*x* > ⊗|y+f(x)>. As described further below, a state-preparation oracle is an oracle configured to generate a quantum state of specified qubit length.

In one or more embodiments, implicit in the description herein is that each qubit 14 of qubit registers can be interrogated via quantum interface 32 so as to reveal with confidence the standard basis vector |0> or |1> that characterizes the quantum state of that qubit. In some implementations, however, measurement of the quantum state of a physical qubit could be subject to error. Accordingly, any physical qubit 14 can be implemented as a logical qubit, which includes a grouping of physical qubits measured according to an error-correcting oracle that reveals the quantum state of the logical qubit with confidence.

As discussed herein, the quantum computer 10 can be implemented using any quantum computing technology. For example, a trapped-ion quantum computer is one example approach for a large-scale quantum computer. Ions, or charged atomic particles, can be confined and suspended in free space using electromagnetic fields. Qubits are stored in stable electronic states of each ion, and quantum information can be transferred through the collective quantized motion of the ions in a shared trap (interacting through the Coulomb force). Lasers are applied to induce coupling between the qubit states (for single qubit operations) or coupling between the internal qubit states and the external motional states (for entanglement between qubits). The fundamental operations of a quantum computer have been demonstrated with the currently highest accuracy in trapped-ion systems.

Another example quantum computer is a neutral atom quantum computer which is a modality of quantum computers built out of Rydberg atoms; this modality has many commonalities with trapped-ion quantum computers. The concept has been used to demonstrate a 48 logical qubit processor. To perform computation, the atoms are first trapped in a magneto-optical trap. Qubits are then encoded in the energy levels of the atoms. Initialization and operation of the computer is performed via the application of lasers on the qubits. For example, the laser can accomplish arbitrary single qubit gates and a CZ gate for universal quantum computation. The CZ gate is carried out by leveraging the Rydberg blockade which leads to strong interactions when the qubits are physically close to each other. To perform a CZ gate, a Rydberg pulse π is applied to the control qubit, a 2π on the target qubit, and then a π on the control. Measurement is enforced at the end of the computation with a camera that generates an image of the outcome by measuring the fluorescence of the atoms.

Further example quantum computers include linear optical quantum computing or linear optics quantum computation (LOQC), also referred to as photonic quantum computing (PQC). LOQC is a paradigm of quantum computation that allows (under certain conditions) universal quantum computation. LOQC uses photons as information carriers, mainly using linear optical elements or optical instruments (including reciprocal mirrors and waveplates) to process quantum information, and uses photon detectors and quantum memories to detect and store quantum information.

Another example is a topological quantum computer, in which the quantum state held in each qubit is a state of two or more braidable quasiparticles, or "anyons", observed within a non-Abelian topological phase of matter. The world lines of different anyons are quantum mechanically forbidden from intersecting or merging. This feature forces their paths to form stable braids that pass around each other in space-time. Relative to trapped particles used in other types of quantum computers, anyon braids are more resistant to quantum decoherence, which is a source of error in quantum computation. However, the realization of a topological quantum computer has the ability to engineer a suitable topological phase and to manipulate the anyons therein.

As noted herein, the instructions 24A cause measurements on the quantum circuit 12 using the modulators 34 and demodulators 36. A measurement of one or more physical qubits 14 is the result of sending a signal via the modulator 34 and receiving a signal back via the demodulator 36. The received signal, also referred to as the measurements, has the quantum information about the logical qubit that is formed of two or more physical qubits 14. Based on a signal sent and the received signal from the quantum circuit 12, a logical qubit is formed of two or more physical qubits 14 as understood by one of ordinary skill in the art. The various signals sent and corresponding signals received back can be performed using any desired encoding scheme or code, as understood by one of ordinary skill in the art.

Any code can be implemented in the instructions 24A in the quantum computer 10. In one or more embodiments, any quantum error correction code such as the Calderbank-Shor-Steane (CSS) code, the Hastings-Haah code, toric code, etc., can be applied on the quantum computer 10 in accordance with computer-executable instructions in the classical computer 100 having been sent to the quantum computer 10 for execution. As understood by one of ordinary skill in the art, the quantum code denotes a technique of operating an array of qubits 14 in the quantum circuit 12. Moreover, the quantum code may include a sequence of qubit measurements on the quantum circuit 12 of the quantum computer 10, and the classical computer 100 eventually stores those measurement outcomes. That sequence of qubit measurements is programmed into the classical computer 100, which then sends signals to the quantum computer 10, indicating which operations to perform on the quantum circuit 12.

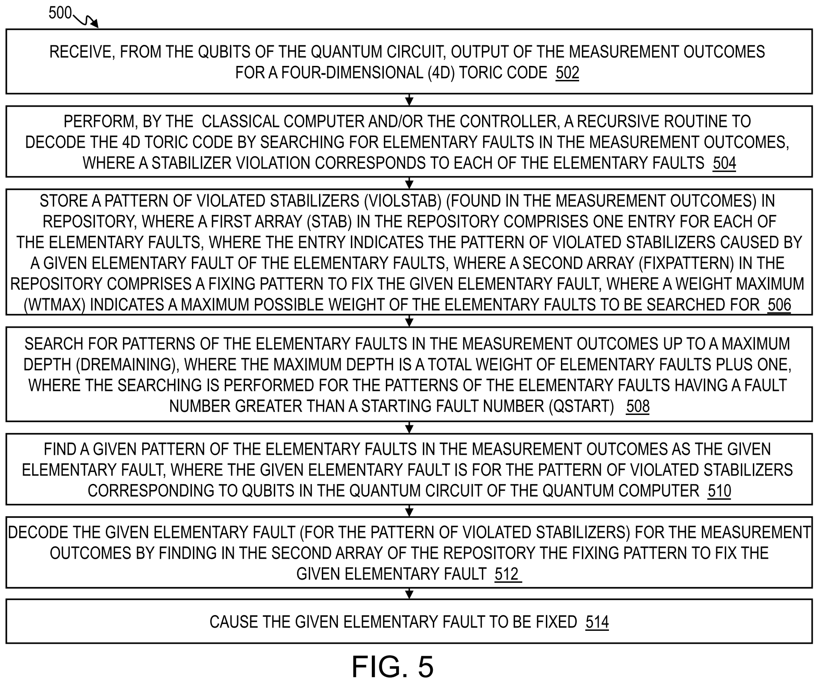

According to one or more embodiments, FIG. 5 depicts a flowchart of a computer-implemented method 500 of a decoder for determining and correcting errors in measurement outcomes from a quantum computer. The computer-implemented method 500 may be performed by software 111, for example, by the decoder 130. The decoder 130 can be utilized by the instructions 24A that cause the processor 20A to execute any function or process of the controller 18A in accordance with one or more embodiments. The instructions 24A may include the instruction set architecture (ISA) for executing on the qubits 14 of the quantum circuit 12. In response to receiving measurement outcomes from the qubits 14 of the quantum circuit 12, the decoder 130 may be executed on the classical computer 100 and/or the controller 18A of the quantum computer 10 in order to find and correct errors of the quantum computer 10.

Reference can be made to Section III subsection C, as discussed further herein.

Turning to FIG. 5, at block 502, the decoder 130 is configured to receive, from the qubits 14 of the quantum circuit 12, output of the measurement outcomes for a four-dimensional (4D) toric code. For example, one or more quantum operations, such quantum gates, have been performed on the qubits 14 of the quantum circuit 12, and measurements are performed to obtain the measurement outcomes of the qubits 14. For example, the measurement outcomes can include the measured states (which can be inferred) of one or more quantum gates such as Clifford gates, non-Clifford gates, etc., output from the qubits 14 of the quantum circuit 12. The measurement outcomes also include the syndrome or syndrome bits for stabilizer operators of the qubits 14 of the quantum circuit 12, which are utilized to find and correct errors on the qubits 14 of the quantum circuit 12, thereby improving the quantum computer 10. As discussed herein, for stabilizer violations, flux loops correspond to violations of stabilizer conditions. The presence of a flux loop indicates that certain stabilizer operators have measured unexpected outcomes, signaling the presence of errors.

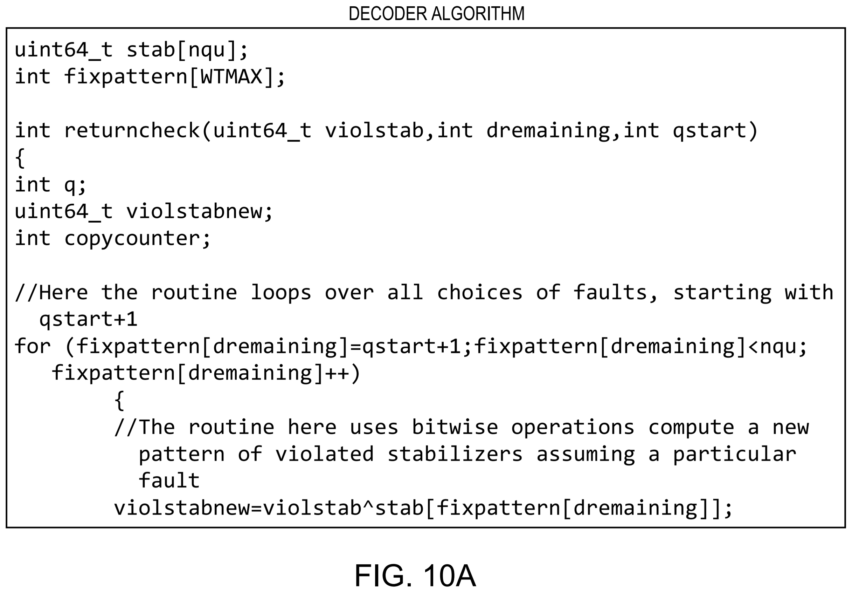

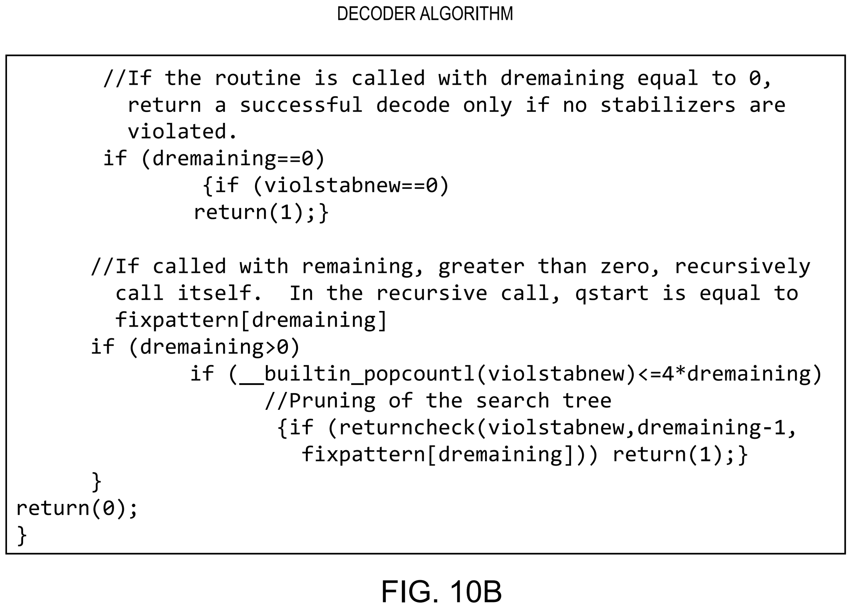

At block 504, the decoder 130 is configured to perform, by the classical computer 100 and/or the controller 18A, a recursive routine (e.g., as part of the decoder algorithm in FIGS 10A and 10B) to decode the 4D toric code by searching for elementary faults in repository 132 in the measurement outcomes, where a stabilizer violation corresponds to each of the elementary faults. Violated stabilizers are found in the measurement outcomes. The decoder 130 analyzes the measurement outcomes, or syndrome bits, to detect stabilizer violations, which indicate the presence and location of elementary faults. By determining the pattern of these faults, the decoder can apply corrective operations to the affected qubits, thereby mitigating the errors and preserving the integrity of the quantum information. The recursive routine of the decoder 130 comprises the following:

At block 506, the recursive routine of decoder 130 is configured to store a pattern of violated stabilizers **(violstab)** (found in the measurement outcomes) in repository 132, where a first array (**stab**) in the repository 132 comprises one entry for each of the (types of) elementary faults, where the entry indicates the pattern of violated stabilizers caused by a given elementary fault of the elementary faults, where a second array **(fixpattern)** in the repository 132 comprises a fixing pattern to fix the given elementary fault, where a weight maximum **(WTMAX)** indicates a maximum possible weight of the elementary faults to be searched for in the first array. The second array **(fixpattern)** has fixing patterns for all the elementary faults.

At block 508, the recursive routine of decoder 130 is configured to search for patterns of the elementary faults in the measurement outcomes up to a maximum depth **(dremaining),** where the maximum depth is a total weight of elementary faults plus one, where the searching is performed for the patterns of the elementary faults having a fault number greater than a starting fault number **(qstart).** This means that when the maximum depth **(dremaining)** is equal to zero the decoder 130 searches for patterns of the elementary faults with one fault, when the maximum depth **(dremaining)** is equal to one the decoder 130 searches for patterns of the elementary faults with two faults, and so forth. The decoder 130 searches the patterns of elementary faults in which the faults numbers are greater than the starting fault number **(qstart).**

Particularly, the decoder 130 is searching through patterns of the elementary faults in order to find/match the pattern of violated stabilizers (in the measurement outcomes) received from the quantum circuit 12, which thereby decodes the pattern of violated stabilizers. The pattern of violated stabilizers **(violstab)** denotes what the decoder 130 is tasked with decoding, such that the decoder 130 can decode a first, second, third, etc., pattern of violated stabilizers of the measurement outcomes. As such, after processing the (first) pattern of violated stabilizers **(violstab),** the decoder 130 is configured to process the next (second) pattern of violated stabilizers **(violstabnew)** in the measurement outcomes from the quantum circuit 12.

Possible patterns of elementary faults can be regarded as a tree
graph. The depth of a vertex of the graph corresponds to a the number of elementary faults, with the root corresponding to no faults. Each vertex corresponds to a particular choice of elementary faults, each edge to a child of a vertex corresponds to adding a single elementary fault, and we choose some lexicographic order to search possible faults so that the graph is a tree. The decoder 130 can initially start with a starting fault number (**qstart**) = -1, so that the decoder 130 searches over all the patterns of the elementary faults in the tree graph of repository 132 for the pattern of violated stabilizers. The decoder 130 repeats the recursive routine with increasing values of the maximum depth **(dremaining)** (e.g., 0, 1, 2, 3, etc.) until a successful decoding is found on a branch of the tree graph or until the weight maximum (**WTMAX**) is reached. The graph is pruned, so that if the decoder is considering a given vertex at some depth and is only searching to some additional depth, then from the difference in these depths one may calculate how much the syndrome weight may change from the given vertex to the maximum depth, and if this change is not sufficient one may prune the branch.

Turning to FIG. 5, at block 510, the recursive routine of decoder 130 is configured to find a given pattern of the elementary faults in the measurement outcomes as the given elementary fault, where the given elementary fault is for the pattern of violated stabilizers corresponding to qubits 14 in the quantum circuit 12 of the quantum computer 10. For example, a 1 can be output to indicate a successful decoding, and a 0 can be output to indicate an unsuccessful decoding. For illustration purposes, it can be assumed that a set of syndrome bits of the measurement outcomes is found to match a given pattern of elementary faults that correspond to the given elementary fault.

At block 512, the recursive routine of decoder 130 is configured to decode the given elementary fault (for the pattern of violated stabilizers) for the measurement outcomes by finding in the second array of the repository 132 the fixing pattern to fix the given elementary fault. The fixing pattern is configured to fix the given elementary fault corresponding to the pattern of violated stabilizers of the measurement outcomes. A fixing pattern contains some combination of elementary faults which produces the observed syndrome.

At block 514, the decoder 130 is configured to cause the given elementary fault to be fixed. In one or more embodiments, blocks 512 and 514 may be performed concurrently. Once the pattern of violated stabilizers of the measurement outcomes are utilized to find the given elementary fault based on the given pattern of the elementary faults, the decoder 130 can cause the given fault to be corrected on the qubits 14 of the quantum computer 10. The decoder 130 is a component of the quantum error correction system whose primary function is to interpret the results of error syndrome measurements and determine the appropriate corrective actions to restore the quantum state to its intended form. During error detection, the decoder 130 analyzes the syndrome bits, which are the outcomes of measurements on stabilizer operators. These measurements indicate whether and where errors have occurred in the quantum computer 10. During error diagnosis, based on the pattern of syndrome bits (e.g., the pattern of violated stabilizers), the decoder 130 identifies the type and location of errors, as found in the second array of the repository 132 by matching the given elementary fault to the fixing pattern to fix the given elementary fault. This involves determining which qubits 14 have been affected and what kind of errors (e.g., bit-flip, phase-flip) have occurred. Once the errors are diagnosed (during error correction), the decoder 130 determines the corrective operations needed to restore the quantum state. These operations are typically quantum gates applied to the affected qubits 14 to reverse the errors. The decoder 130 may include, call, and/or employ various decoding algorithms including, for example, the minimum weight perfect matching algorithm, etc.

The algorithm (of decoder 130) uses a pruning step. In this case, if the Hamming weight of **violstabnew** is larger than **4*dremaining,** then there is no way to find a fault pattern which gives a successful decode because, for the 4D toric code, where elementary faults correspond to flipped qubits, a single fault can only lead to at most 4 violated stabilzers. This pruning step leads to a significant speedup. This pruning step may be changed if a larger pattern of elementary faults is used, so that a single fault may lead to more violated stabilizers. If used for a code with more than 64 stabilizers, then the pattern of violated stabilizers may be stored in an array of unsigned 64-bit integers.

For example, 64 syndrome bits are stored in a single 64-bit integer, so if there are more, it is stored in an array. For example, 128 = 64*2 so it can be stored with 2 64-bit integers. Also, it is noted that the significant speedup is in the decoding process performed by the decoder 130, which in turns causes a speedup in the quantum processing by the quantum computer 10 because the quantum computer 10 receives the corrections from the decoding faster in order to perform the next quantum operation (e.g., quantum gate).

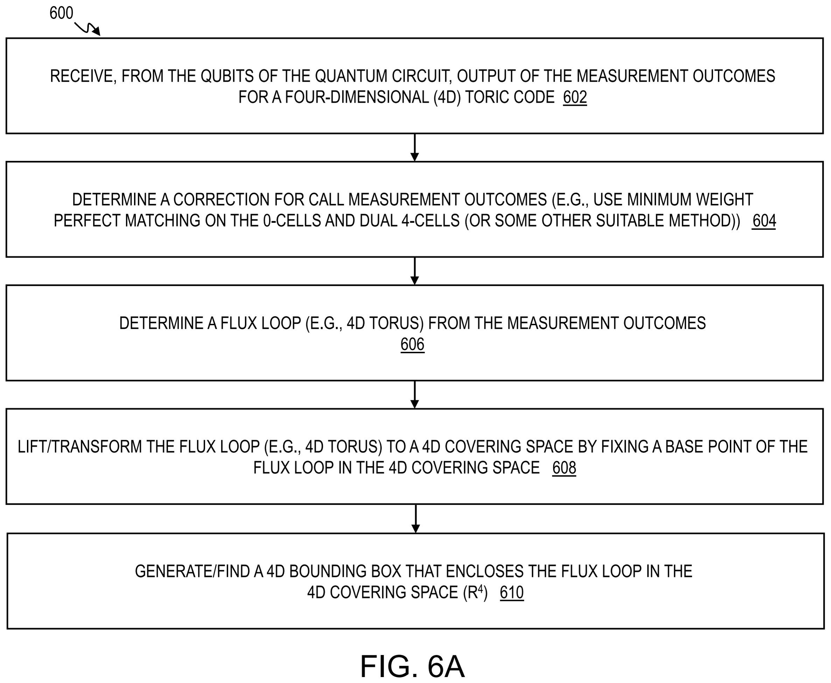

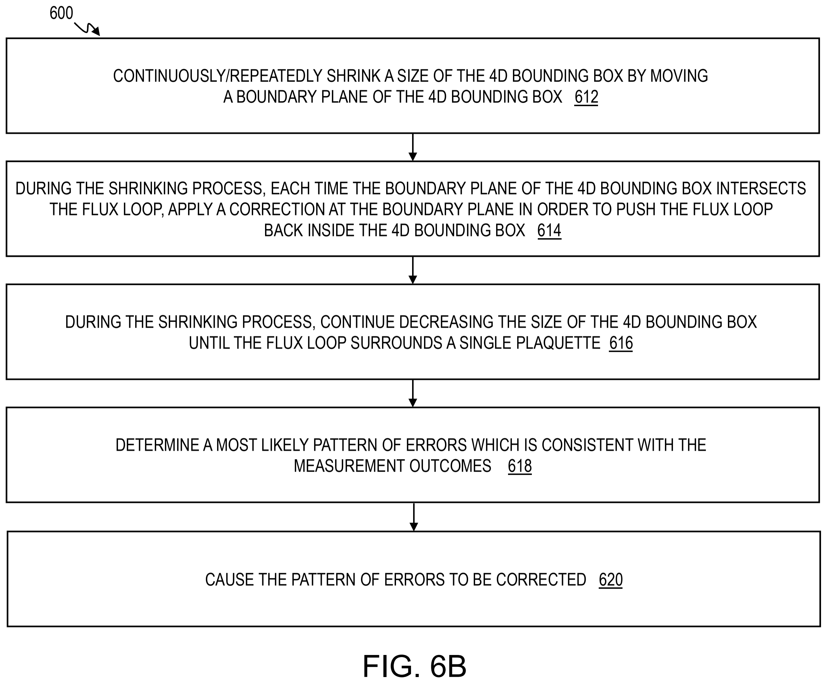

According to one or more embodiments, FIGS. 6A and 6B depict a flowchart of a computer-implemented method 500 for a decoder for determining and correcting errors in measurement outcomes from a quantum computer. The computer-implemented method 600 may be performed by software 111, for example, by the decoder 130. The decoder 130 can be utilized by the instructions 24A that cause the processor 20A to execute any function or process of the controller 18A in accordance with one or more embodiments. The instructions 24A may include the instruction set architecture (ISA) for executing on the qubits 14 of the quantum circuit 12. In response to receiving measurement outcomes from the qubits 14 of the quantum circuit 12, the decoder 130 may be executed on the classical computer 100 and/or the controller 18A of the quantum computer 10 in order to find and correct errors of the quantum computer 10.

For FIGS. 6A and 6B, reference can be made to Section III subsections A, B, and D, as discussed further herein.

Turning to FIG. 6A, at block 602, the decoder 130 is configured to receive, from the qubits 14 of the quantum circuit 12, output of the measurement outcomes for a four-dimensional (4D) toric code. For example, one or more quantum operations, such as quantum gates, have been performed on the qubits 14 of the quantum circuit 12, and measurements are performed to obtain the measurement outcomes of the qubits 14. For example, the measurement outcomes can include the measured states (which can be inferred) of one or more quantum gates such as Clifford gates, non-Clifford gates, etc., output from the qubits 14 of the quantum circuit 12. As discussed herein, the measurement outcomes also include the syndrome or syndrome bits for stabilizer operators of the qubits 14 of the quantum circuit 12, which are utilized to find and correct errors on the qubits 14 of the quantum circuit 12, thereby improving the quantum computer 10. As discussed herein, for stabilizer violations, flux loops correspond to violations of stabilizer conditions. The presence of a flux loop indicates that certain stabilizer operators have measured unexpected outcomes, signaling the presence of errors.

At block 604, the decoder 130, by the classical computer 100 and/or the controller 18A, is configured to determine a correction for all measurement outcomes (for example, use minimum weight perfect matching on the 0-cells and dual 4-cells (or some other suitable method)). The graph is given by a 4D cubic lattice (either the direct graph, or the dual graph). The edges of this graph can be weighted according to how likely a measurement error is. A minimum weight perfect matching consists of a matching of the 'lit up' vertices in this graph (i.e., the mod 2 sum of the edge measurements exiting a vertex determine whether the vertex is lit up or not) which minimizes the total weight. The weight is determined by summing over all edges used in the matching multiplied by their corresponding weights.

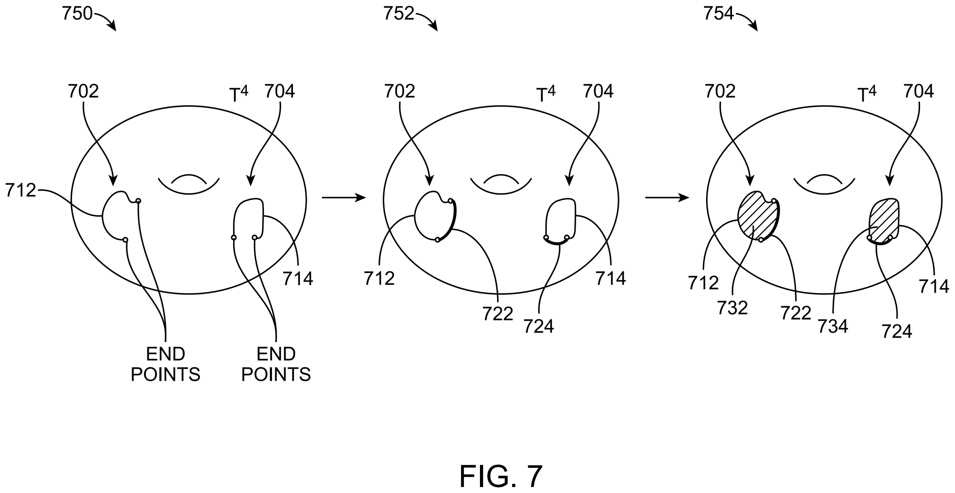

At block 606, the decoder 130 is configured to determine a flux loop (e.g., 4D torus) from the measurement outcomes. When the measurement outcomes have a measurement error, the measurement error can be corrected using a suitable technique. In one or more embodiments, the flux loop can be a loop segment as a partial flux loop, and the loop segment is not formed into a closed flux loop because of a measurement error. To represent the loop segment of the flux loop, a 1-chain is found to denote the edges of the loop segment. With the edges of the loop segment known because of the 1-chain, next a fictitious loop segment is connected to the edges of the loop segment of the partial flux loop in order to form a closed flux loop; the fictious loop segment is created by constructing a 1-cyle that denotes the boundary of the (closed) flux loop. The fictitious loop segment is a placeholder loop segment. Then, a correction 2-chain is applied to the (closed) flux loop to correct the measurement error. Further details of a novel technique of using a fictious loop segment to close the flux loop is described further in Section III subsection A and depicted in FIG. 7.

At block 608, the decoder 130 is configured to lift/transform the flux loop (e.g., 4D torus) to a 4D covering space by fixing a base point of the flux loop in the 4D covering space. We lift the 4D torus to ${ℝ}^{4}$ by taking each point {x,y,z,w} in *T*⁴ and mapping it to the {x,y,z,w} in ${ℝ}^{4}$.

At block 610, for the flux loop (4D torus (*T*⁴)), the decoder 130 is configured to generate/find a 4D bounding box that encloses the flux loop in the 4D covering space ( ${ℝ}^{4}$). In one or more embodiments, using the coordinates of the flux loop, the decoder 130 is configured find coordinates for the 4D bounding box to encompass the flux loop coordinates of the flux loop in the 4D covering space.

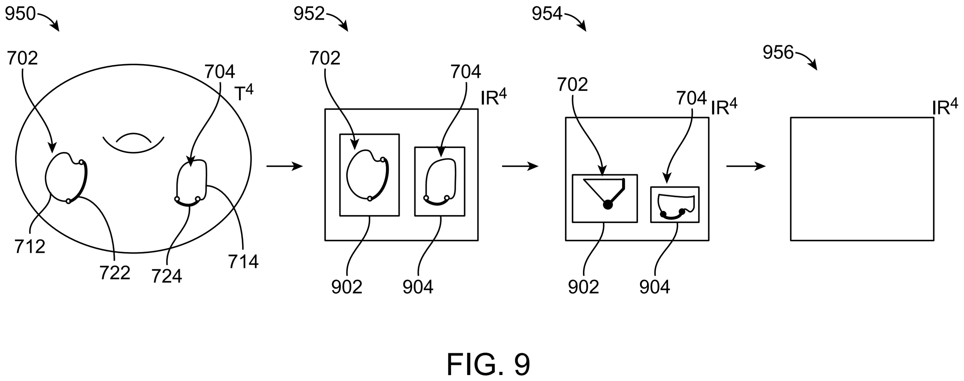

In FIG. 6B, at block 612, the decoder 130 is configured to continuously/repeatedly shrink a size of the 4D bounding box by moving a boundary plane of the 4D bounding box inward. An example illustration of technique of finding a 4D bounding box and shrinking the 4D bounding box is described further in Section III subsection D and depicted in FIG. 9. The shrinking process comprises the following.

At block 614, during the shrinking process, the decoder 130 is configured to, each time the boundary plane of the 4D bounding box intersects the flux loop, apply a correction at the boundary plane in order to push the flux loop back inside the 4D bounding box. The boundary plane refers to a membrane as understood by one of ordinary skill in the art. The correction includes selecting/finding any (one) plaquette that extends to a direction perpendicular to the boundary plane that touches a loop segment of the flux loop and flipping the plaquette to push the loop segment inward (in the 4D bounding box). Flipping a plaquette means to apply a correction. All plaquettes on the interior of the bounding box will pass the boundary of the bounding box while we shrink the bounding box. It is noted that each plaquette has a qubit, and the correction is applied to all plaquettes determined by the shrinking 4D bounding box. In one or more embodiments, the coordinates of the boundary plane are changed to move the boundary plane inward, and the correction may be to cause a state of the qubit for the plaquette to flip. As the 4D bounding box continues shrinking, for each plaquette that is found in the direction perpendicular to the boundary plane that touches a loop segment of the flux loop, the corresponding qubit of the plaquette (perpendicular to the boundary plane) can be flipped. The bounding box is determining a correction based on the non-trivial syndromes in a way that is minimizing the weight of the correction.

At block 616, during the shrinking process, the decoder 130 is configured to continue decreasing the size of the 4D bounding box until the flux loop surrounds a single plaquette. The single plaquette corresponds to a qubit, and this ends the shrinking process.

At block 618, the decoder 130 is configured to determine a most likely pattern of errors which is consistent with the measurement outcomes. For example, the pattern of errors is for a set of syndrome bits of the measurement outcomes.

At block 620, the decoder 130 is configured to cause the pattern of errors to be corrected. The decoder 130 may cause the state of the qubit 14 of the single plaquette to be flipped in the quantum circuit 12 of the quantum computer 10.

Headings are presented in the descriptions for ease of understanding and to assist the reader. The use of headings is not meant to be limiting. It should be appreciated that the descriptions presented under headings can be integrated with the descriptions presented under other headings and/or descriptions with no headings.

### I. INTRODUCTION

The classical computer 100 includes software 111 having computer-executable instructions that, when executed by one or more processors 101, cause the processors 101 to perform in accordance with one or more embodiments as discussed herein. The software 111 can include, be integrated with, and/or call various pieces of software to operate as discussed herein. The software 111 is configured to operate with or call one or more application programing interfaces (APIs) to utilize various software tools, software programs, and a decoder 130 as understood by one of ordinary skill in the art. The software 111 can cause the quantum circuit 12 to perform quantum operations on the qubits 14 in order to change the state of the qubits 14 and/or receive measurements or measurement outcomes from the qubits 14. The classical computer 100 and/or the controller 18A receives the measurements or measurement outcomes, checks for errors using a decoder (such as decoder 130), performs error correction (e.g., using the output of the decoder 130) for the errors, and/or causes further quantum operations to be performed on the qubits 14 of the quantum circuit 12 according to the states of the qubits 14 that have been corrected (using the decoder 130). The quantum circuit 12 is controlled by the classical computer 100 and/or the controller 18A to perform the corrections to the qubits 14 of the quantum circuit 12 as instructed by the decoder 130.

The software 111 is configured to include computer-executable instructions to operate as the decoder 130 as discussed herein. The present disclosure describes the decoding problem and several decoders for the rotated 4D toric code.

### II. REVIEW OF 2D TORIC CODE DECODING PROBLEM

The present disclosure reviews the decoding problem of the 2D toric code on a square lattice L as a primer for the 4D toric (2,2) toric code. One can consider the decoding problem for Z errors which are detected by the vertex syndrome bits given by the measurement outcome of *A_{ν} =* Π_{*e*:∂*e*∩*ν*≠}*_{ϕ} X*(*e*).

In the absence of measurement errors, the decoding graph is given by the 2D square lattice. One can color (or identify) each vertex as 0 or 1 according to its syndrome value. This defines a 0-chain $S ∈ {C}^{0} \left(L, {F}_{2}\right)$, where *C*⁰ represents the set of 0-cells, where S is the 0-chain, and where *L* refers to a lattice. ${F}_{2}$ refers to a finite field with two elements and is used to represent the coefficients of chains, such as 1-chains and 2-chains, in a lattice. ${F}_{2}$ refers to a collection of edges in a lattice that have non-trivial measurement outcomes for the *X* stabilizers. The coefficients of this chain (e.g., 0-chain, 1-chain, 2-chain) are elements of ${F}_{2}$, indicating whether an edge is included (1) or not included (0) in the chain. To decode, the present disclosure finds a 1-chain $C ∈ {C}^{1} \left(L, {F}_{2}\right)$ such that ∂*C = S,* where *C*¹ refers to the set of 1-cells where C represents a chain group or chain complex used to describe collections of elements (e.g., such as edges) in a lattice, where *a* is a boundary operator, where is ∂*C* is the boundary operator of *C*. Note that the error configuration is also a 1-chain $E ∈ {C}^{1} \left(L, {F}_{2}\right)$, and ∂*E = S* , where ∂*E* is the boundary operator of *E*, where *S* refers to the syndrome chain. The syndrome chain *S* corresponds to the 0-chain. To minimize the probability of inducing a logical fault under decoding, the present disclosure searches for a 1-chain with minimum weight. A logical fault occurs when the cycle *C* + *S* has non-trivial homology. An identical decoding problem for X errors lives on the dual lattice.

In the presence of measurement errors, syndrome bits are unreliable, and stabilizers need to be measured repeatedly. Correspondingly, the decoding graph lives on a 5-dimensional cubic lattice $L \times ℤ$, where $ℤ$ refers to the integers. In space, one associates plaquettes, edges, and vertices to Z-stabilizers, qubits, and X-stabilizers respectively. In spacetime, the present disclosure multiplies each plaquette, edge, and vertex by a unit time interval, to obtain volumes, plaquettes, and edges respectively, identified with Z-stabilizers, qubits, and X-stabilizers respectively. In the following, the present disclosure considers only *Z* errors. The two types of errors that can ocurr are (1) errors on qubits, and (2) measurement errors. Qubit error chains live on space-like edges, occurring between stabilizer measurements, and measurement errors live on time-like edges, indicating an incorrectly measured stabilizer value. Thus, in general, an error chain in space time is given by a 1-chain $E ∈ {C}^{1} \left(L\times ℤ,{F}_{2}\right)$. Spatial edges are qubit errors, and temporal edges are measurement errors. The information given is a syndrome vector, which is a temporal 1-chain $S ∈ {C}^{1} \left(L\times ℤ,{F}_{2}\right)$ indicating 0 or 1 for every stabilizer measurement. E is an error chain, and S is the syndrome chain. The task of the present disclosure is to find a correction 1-chain $C ∈ {C}^{1} \left(L\times ℤ,{F}_{2}\right)$ which satisfies ∂*C =* ∂*S.* The quality of the solution is determined by how frequently the present disclosure induces a logical error that is given anytime *E* + *C* has non-trivial homology. Typically, one uses minimum weight matching to find *C*.

### III. 4D TORIC CODE DECODE PROBLEM

The present disclosure considers the four dimensional (2,2) toric code on a four-dimensional cubic lattice *L*. The X-stabilizers live on the 1-cells and are given by *X*(∂*^{T}e*) for *e* a 1-cell, the qubits live on the 2-cells, and Z-stabilizers live on the 3-cells and *Z*(∂*r*) for *r* a 3-cell. It is noted that *e* refers to edge, *r* refers to a 3-cell and *T* refers to transpose.

The present disclosure considers the decoding problem for *Z* errors, which are detected by 1-cell *X*-stabilizers.

### A. Single-Shot decoding Problem

Because there is redundancy among the stabilizers of the 4D (2,2) toric code, it is fault tolerant with one round of measurements. The present disclosure considers the decoding problem for *Z* errors, detected by the 1-cell *X* stabilizers.

The present disclosure begins with the syndrome 1-chain $S ∈ C \left(L, {F}_{2}\right)$, denoting a set of edges which have non-trivial measurement outcomes for the *X* stabilizers. In the absence of measurement errors, the *X* stabilizers satisfy the relation Π_{*e*∈∂}*_{_{Tv}} X*(*e*) = id, due to the fact that ∂*^{T}* ∂*^{T}* = 0, where e represents edges, where v represent vertices, where id refers to the identity operator (that represents a state or operation that leaves the quantum state unchanged), and where X(e) denotes the application of the Pauli-X operator on the qubit associated with the edge e. Thus, the present disclosure can find a 0-chain ${S}_{m} ∈ {C}^{0} \left(L, {F}_{2}\right)$ given by *Sₘ*(*ν*) *=* Σ_{*e*∈*δ*(*ν*)} *S* (*ν*), where C⁰ represents the group of 0-chains in a lattice used to describe configurations of vertices, where *Sₘ* represents a 0-chain, where *Sₘ*(*ν*) suggests that the 0-chain *Sₘ* is constructed by summing over the edges e that are incident to a vertex v. The first step of the decoding process is to correct these measurement errors. That is, find a 1-chain $C ∈ {C}^{1} \left(L, {F}_{2}\right)$ such that ∂*C* = *Sₘ =* ∂*S,* where *a* is a boundary operator, ∂*C* is a boundary operator of chains C, ∂*S* is the boundary operator of chains S, C¹ is the set of 1-cells. Good quality solutions have low weight. Next, the present disclosure constructs the 1-cycle $C + S ∈ {Z}^{1} \left(L, {F}_{2}\right)$, which is denoting with high probability the boundary of a flux loop, where *Z*¹ refers to the group of 1-cycles in a lattice, where ${Z}^{1} \left(L, {F}_{2}\right)$ denotes the group of 1-cycles on a lattice *L* with coefficients in the finite field ${F}_{2}$. The present disclosure then searches for a correction 2-chain *C_{F}* such that ∂*C_{F} = C + S,* where *C_{F}* is a 2-chain in a lattice whose boundary corresponds to a 1-chain of errors and syndromes, where ∂*C_{F}* is the boundary of *C_{F}.* Again, the quality of the solution is given by finding such a *C_{F}* which minimizes the weight. The weight of a chain in a lattice is the number of elements (e.g., edges, faces) that are included in the chain. For example, the weight of a 1-chain is the number of edges it contains, and the weight of a 2-chain is the number of faces it includes.

FIG. 7 depicts an example topological illustration of the single-shot decoding. As depicted in FIG. 7, single shot decoding is given by (a) first doing minimum weight matching on the 0 cells (and dual 4-cells) to correct measurement errors and determine a set of closed the flux loops 702 and 704, and (b) finding minimum weight membranes (including fictious/placeholder loop segments 722 and 724) whose boundary is the closed loop configuration. It is noted that the 1-chain S in the absence of measurement errors is a 1-cycle, and with measurement errors, the present disclosure sees a 1-chain given by a list of loop segments, denoting partial flux loops.

In view 750 of FIG. 7, the flux loop 702 has a loop segment 712 as a partial flux loop and the flux loop 704 has a loop segment 714 as a partial flux loop. In view 752, the ends of the loop segment 712 are found and the fictious/placeholder loop segment 722 is connected to the ends in order to close the flux loop 702. Similarly, the ends of the loop segment 722 are found and the fictious/placeholder loop segment 724 is connected to the ends in order to close the flux loop 704. In view 754, the shaded flux loop 702 and shaded flux loop 704 denotes the membranes 732 and 734 respectively, as the boundary of the closed loop configurations.

### B. Spacetime Decoding Problem

The present disclosure considers the evolution of a flux loop in 4 + 1D space time. In the absence of errors, the evolution of the flux loop will carve out a cylinder, with two spatial "holes", one spatial hole denoting where it was created, and one spatial hole where it terminates. In this setting, the creation and termination of those spatial holes are errors. If there are measurement errors during the flux loops evolution, at a given time slice, the flux loop will appear as a segment. In spacetime, measurement errors appear as temporal holes in the surface that is being carved out by a flux loop. In general, an error configuration in spacetime is a two-dimensional surface in 4 + 1D spacetime. In the context of spacetime, "4+1D" refers to a five-dimensional space that includes four spatial dimensions (e.g., "4") and one time dimension (e.g., 1D). The syndrome information is a collection of loops in spacetime, from which the present disclosure is to construct a hypothesis for the two-dimensional surface that bounds those loops. A good hypothesis is one that has low weight. The present disclosure now puts this picture into a more formal setting, similar to the discussion in Section II.

The decoding graph lives on a 5D cubic lattice given by $L \times ℤ$, where $ℤ$ denotes time. The X-stabilizers, qubits, and Z-stabilizers live on 1-cells, 2-cells, and 3-cells in space, in spacetime they get promoted to 2-cells, 3-cells, and 4-cells respectively. Again, the present disclosure considers the decoding problem for *Z* errors, which are detected by *X* stabilizers, identified with 2-cells. Physical qubit errors occur on spatial 2-cells. Measurement errors occur on temporal 2-cells. Thus, a general error 2-chain is given by some $E ∈ {C}^{2} \left(L\times ℤ, {F}_{2}\right)$, where *C*² refers to 2-cells and where ${F}_{2}$ refers to the field with 2 elements. In the present disclosure, the task is to correct the error 2-chain.

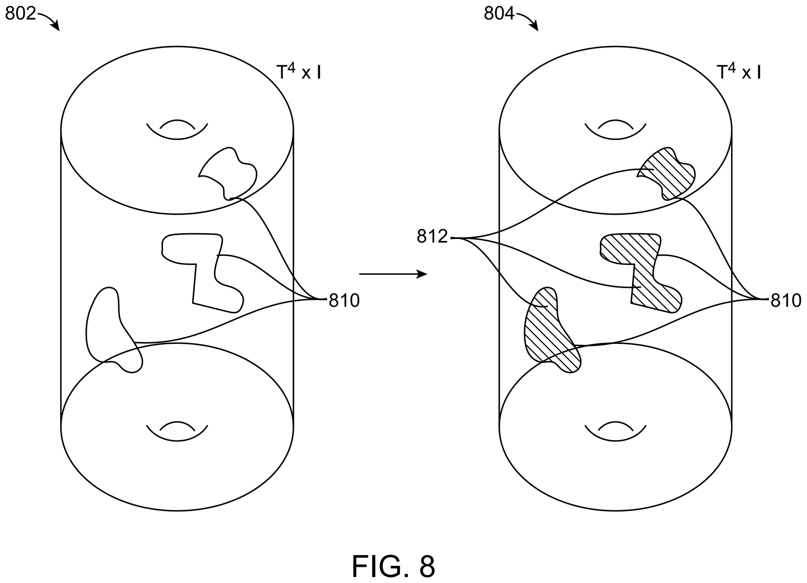

In accordance with one or more embodiments, the starting point is a temporal syndrome 2-chain $S ∈ {C}^{2} \left(L\times ℤ, {F}_{2}\right)$, denoting the measurement outcomes. As noted above, the 2-chain *S* can be interpreted as a surface in 5-dimensions denoting the spacetime trajectory of a flux loop; spatial holes are qubit errors growing or shrinking the flux loop, and temporal holes are measurement errors. The present disclosure is to find a correction 2-chain $C ∈ {C}^{2} \left(L\times ℤ, {F}_{2}\right)$ that satisfies ∂*C =* ∂*S.* The quality of the solution is again determined by how frequently the process induces a logical fault, which occurs anytime *E* + *C* has non-trivial homology. To find good quality solutions, the present disclosure searches for a 2-chain *C* of minimum weight, and a topological illustration is depicted in FIG. 8. FIG. 8 depicts, for a decoder 130 with memory, the decoding problem of (2,2) toric code is interpreted as minimum wight matching of loops on a 5-dimensional lattice. Depicted is a memory, where a 4-torus lives for a period of time. FIG. 8 depicts views 802 and 804 of a cylinder formed by the flux loop, with two spatial holes in which one is at the top and bottom. Example flux loops 810 are depicted in view 802. In view 804, the shading of flux loops 810 depicts that membranes 812 have been identified as 2-chain *C* for the respective flux loops 810.

### C. Practical Decoder: Fast Decoder To Perform Minimum Weight Decoding

One or more embodiments provide a fast decoder 130 to perform minimum weight decoding. The decoder 130 receives as input a set of elementary faults, and the stabilizer violation for each such elementary fault, and rapidly finds the minimum weight set of faults which gives the observed stabilizer violation. While this is the minimum weight, the decoder 130 runs fast primarily due to a combination of two factors. (1) The code itself is written efficiently, using a recursive routine and machine-level bitwise operations to compute the stabilizer violation. (2) The code "prunes" the search tree, by iteratively increasing the maximum weight and pruning branches of the tree which cannot work at the given weight. Modifications of the routine handle "windowing" (e.g., decoding a sequence of errors over time, where each run of the decoder fixes the errors in some given time interval), and allow increased system size. In one or more embodiments, heuristics can be utilized for more aggressive search tree pruning to increase speed at larger system sizes.

According to one or more embodiments, an example of the recursive routine used in the decoder 130 is shown in a decoder algorithm in FIGS. 10A and 10B. This example works to decode a code with **nqu** possible elementary faults, numbered from 0 to *nqu* - 1. This number (e.g., nqu) of faults can denote the number of qubits, with one possible fault for each qubit, in which case the decoder 130 can be used to decode a state after it has been read out in a particular basis. The number of elementary faults may be increased if a decoding circuit is used, in which case there is one elementary fault per location in the circuit at which a gate may occur. For explanation purposes, this example assumes that at most 64 stabilizers are measured and that the decoder 130 is applied to the case of a 4*D* toric code. The present disclosure explains where these assumptions are used and how to modify the decoder 130 below.

The recursive routine stores a pattern of violated stabilizers in this case as a single unsigned 64-bit integer. Two global variables are used. The first global variable is an array, **stab,** for example, in the repository 132. This stab array contains one entry for each elementary fault, with the entry indicating the pattern of violated stabilizers caused by that fault. The second array, **fixpattern,** stores the pattern to fix the fault found, for example, in the repository 132. The quantity **WTMAX** indicates the maximum possible weight of faults that the recursive routine of the decoder 130 will search.

The decoder routine recursively searches for patterns of faults up to some maximum depth, **dremaining,** set as an argument to the decoder 130. The maximum depth corresponds to the number of elementary faults that can be searched for. Moreover, **dremaining** is equal to the total weight of faults plus one, so that when called with **dremaining** equal to zero, decoder routine searches patterns of one fault; while when called with **dremaining** equal to one, decoder routine searches patterns of two faults, and so on. For example, the decoder routine searches up to WTMAX, and the first calls are with smaller weights, increasing the weight until it reaches WTMAX. The decoder routine searches only among fault patterns in which all fault numbers are greater than some number, **qstart,** for reasons explained below. The final argument to the decoder, **violstab,** denotes the pattern of violated stabilizers (e.g., in the measurement outcomes from the quantum circuit 12 of the quantum computer 20) that the decoder routine is trying to decode. In typical use, this decoder 130 is called initially with *qstart =* -1, so that the decoder 130 searches over all fault patterns, with **violstab** set equal to some desired pattern to decode, and is called sequentially with **dremaining** equal to 0,1,2,3, ... until a successful decoding was found or until **WTMAX** is reached.

To indicate a successful decoding is found, this decoder routine returns a 1, and otherwise it returns a 0. Comments within the routines explain the bitwise operations to compute the pattern of violated stabilizers. The routine loops over all choices of a single fault, storing this in **fixpattern[dremaining].** As **dremaining** changes as it calls itself recursively, on a successful decode the fault pattern is stored in the array **fixpattern.**

For each choice, of a single fault, if **dremaining** is greater than zero, it calls itself recursively, with **qstart** increased to equal **fixpattern[dremaining];** as a result of this, the faults in **fixpattern** will be in decreasing order, with faults with larger **dremaining** having a smaller number than other faults. This means that each fault pattern is searched at most once, without searching different permutations of a fault pattern separately. The syntax **fixpattern[dremaining]** means that this array holds a pattern of elementary faults, which, on a successful return from the decoder, is a minimal weight pattern that gives the observed error syndrome.

The algorithm uses a pruning step. In this case (during the pruning step), if the Hamming weight of **violstabnew** is larger than **4*dremaining,** then there is no way to find a fault pattern which gives a successful decode because, for the 4*D* toric code, where elementary faults correspond to flipped qubits, a single fault can only lead to at most 4 violated stabilzers. This pruning step leads to a significant speedup. This pruning step removes branches of the tree for which no successful decode can be found at the given number of elementary faults.

This pruning step may be changed if a larger pattern of elementary faults is used, so that a single fault may lead to more violated stabilizers.

If used for a code with more than 64 stabilizers, then the pattern of violated stabilizers may be stored in an array of unsigned 64-bit integers.

### D. Lifting Curves To Shrink: An Efficient Decoder for Large Codes

The novel idea is to use a covering map ${ℝ}^{4} \to {T}^{4}$. Ignoring measurement errors, which is be corrected by matching end points of flux lines, the decoder 130 is configured to find membranes whose boundary is a given configuration of flux loops.

If a (flux) loop is in ${ℝ}^{4}$, then the decoder 130 is configured to find a membrane (2-chain), and any membrane is homologous to another membrane. Concretely, the decoder 130 is configured to find a bounding box of a loop in ${ℝ}^{4}$, and shrink the box by moving a boundary plane. Whenever the boundary plane encounters a loop segment, the decoder 130 is configured to find any plaquette that extends to the direction perpendicular to the boundary plane and flip that plaquette to push the loop segment inward, as discussed further in FIG. 9. Eventually, the decoder 130 is configured to find a membrane.

Given a (flux) loop in *T*⁴, the decoder 130 is configured to lift it (the flux loop) to a curve in ${ℝ}^{4}$ by fixing a base point in the covering space (e.g., 4D covering space ${ℝ}^{4}$). This can be algorithmically performed. For example, the decoder 130 is configured to start with a loop segment (the starting loop segment to be lifted), look for its end point, and bring another segment connected to that end point. The decoder 130 is configured to keep doing it (adding loop segments) until all the loop segments are lifted. As noted above, the beginning and ending each loop segment of the flux loop is identified for flux loop in *T*⁴, such that the coordinates of the beginning and ending of the loop segments are mapped as curves into the covering space ${ℝ}^{4}$ until the entirety of the flux loop in *T*⁴ has been mapped into the covering space ${ℝ}^{4}$; this is lifting the flux loop in *T*⁴, into 4D covering space ${ℝ}^{4}$. The starting loop configuration does not have to be a topological circle. Any 1-cycle over $ℤ / 2$ will be lifted in some way, where the precise lifted curve depends on the resolution of crossings. Although some decisions may be better than the another, any variations in choices here are unlikely to affect the outcome.

More subtle situations appear when a loop is lifted to an open line, that is when the loop represents a nonzero 1-homology class. This may happen because the only requirement on the total loop configuration is that the totality of the loops is $ℤ / 2$-homology trivial. Some choice needs to be made about how to combine two or more homology 1-cycles to find a 2-chain whose boundary is the collection. To this end, a novel technique is to connect loops in *T*⁴ by fictitious (placeholder) line segments that are traversed back and forth upon the lifting procedure. These are line segments that are closed loops on the torus, but lift to segments in R4. The line segments can be chosen to be the shortest line segments that join different loop components in *T*⁴. It is like matching among loops, but not exactly. The decoder 130 is configured to make a collection of disjoint loops into a connected single loop by inserting fictitious (placeholder) lines. The role of fictitious lines is to make the lifting to ${ℝ}^{4}$ unique.

The decoder's performance is determined by (1) resolution of crossing points where an even number (≥ 4) of edges are meeting, and (2) the choice of fictitious lines that connect loop components. These two considerations are choices that are being made in the implementation of the decoder, and an optimization can be done to determine what choice to make for a given code. This decoding algorithm of the decoder 130 is formally efficient and has a provable positive memory threshold by percolation argument.

For a geometric picture of the operation of this decoder 130, an example is depicted in FIG. 9. The first step in this decoder is to match the open loops, which can be achieved following Section III A for example, as depicted in FIG. 7. Continuing the example from FIG. 7, view 950 in FIG. 9 depicts the flux loops 702 and 704 in the space for the 4D torus *T*⁴. As seen in view 952 in FIG. 9, the second step is to lift the loops in T⁴ to ${ℝ}^{4}$ and put the lifted flux loops into boxes 902 and 904 (e.g., 4D bounding boxes), and the second step in view 954 is to squeeze the boxes 902 and 904 down to trivial size while applying the appropriate membrane operator as described herein. View 956 in FIG. 9 depicts how the errors are being corrected during this process. Applying the appropriate membrane operator is to correct all errors with high probability.

According to one or more embodiments, a method for determining and correcting an error in measurement outcomes from a quantum circuit, the method comprising: receiving, from the quantum circuit, output of the measurement outcomes for a four-dimensional (4D) toric code; determining a flux loop from the measurement outcomes, wherein the flux loop corresponds to a 4D torus; transforming the flux loop to a 4D covering space by fixing a base point of the flux loop in the 4D covering space, wherein a 4D bounding box is generated that encloses the flux loop in the 4D covering space; shrinking the 4D bounding box enclosing the flux loop by decreasing a size of the bounding box, wherein the shrinking continues until the 4D bounding box surrounds a single plaquette, wherein a pattern of errors correspond to the single plaquette; and correcting the pattern of errors corresponding to the single plaquette.

Additionally, a measurement error of the measurement outcomes is corrected. The method include, in response to the flux loop initially being a loop segment that does not close the flux loop because of a measurement error, finding a 1-chain to denote edges of the loop segment; with the edges of the loop segment known, connecting a placeholder loop segment to the edges of the loop segment in order to close the flux loop, wherein the placeholder loop segment is created by constructing a 1-cyle that denotes the boundary of the flux loop that is closed; and correcting the measurement error by applying a 2-chain the flux loop.

Also, the n the shrinking of the 4D bounding box enclosing the flux loop comprises continuously moving a boundary plane of the 4D bounding box to intersect the flux loop and applying a correction at an intersection of the boundary plane and the flux loop. A plaquette is found at the boundary plane; and the correction includes changing a state of a qubit of the plaquette. The single plaquette has a qubit, and the pattern of errors is a qubit error. Correcting the pattern of errors corresponding to the single plaquette include causing a state of the qubit on the quantum circuit to change.

According to one or more embodiments, a method for determining and correcting an error in measurement outcomes from a quantum circuit, the method comprising: receiving, from the quantum circuit, output of the measurement outcomes for a four-dimensional (4D) toric code; performing a recursive routine to decode the 4D toric code by searching for elementary faults in the measurement outcomes, where a stabilizer violation corresponds to each of the elementary faults, wherein the recursive routine comprises: storing a pattern of violated stabilizers found in the measurement outcomes, wherein a first array comprises one entry for each of the elementary faults, wherein the entry indicates the pattern of violated stabilizers caused by a given elementary fault of the elementary faults, wherein a second array comprises a fixing pattern to fix the given elementary fault; searching for patterns of the elementary faults in the measurement outcomes up to a maximum depth, wherein the maximum depth is a total weight plus one, wherein the searching is performed for the patterns of the elementary faults having a fault number greater than a starting fault number; determining a given pattern of the elementary faults in the measurement outcomes as the given elementary fault; and decoding the given elementary fault for the measurement outcomes by finding in the second array the fixing pattern to fix the given elementary fault; and causing the given elementary fault to be fixed.

Further, a weight maximum indicates a maximum possible weight of the elementary faults to be searched for. The second array comprises fixing patterns for all of the elementary faults. The patterns of the elementary faults are stored as a tree graph that can be searched, the tree graph comprising branches of the elementary faults; and a branch of the tree graph has a weight that denotes a number of syndrome bits that are able to be decoded.

Also, the recursive routine continues searching until a successful decoding is found on the branches of the tree graph or until a weight maximum is reached. The given elementary fault is a qubit error associated with one or more qubits on the quantum circuit; and causing the given elementary fault to be fixed comprises changing a state of the one or more qubits on the quantum circuit.

Turning now to FIG. 4, a computer system 100 is generally shown in accordance with one or more embodiments of the invention. The computer system 100 can be an electronic, computer framework comprising and/or employing any number and combination of computing devices and networks utilizing various communication technologies, as described herein. The computer system 100 can be easily scalable, extensible, and modular, with the ability to change to different services or reconfigure some features independently of others. The computer system 100 may be, for example, a server, desktop computer, laptop computer, tablet computer, or smartphone. In some examples, computer system 100 may be a cloud computing node. Computer system 100 may be described in the general context of computer system executable instructions, such as program modules, being executed by a computer system. Generally, program modules may include routines, programs, objects, components, logic, data structures, and so on that perform particular tasks or implement particular abstract data types. Computer system 100 may be practiced in distributed cloud computing environments where tasks are performed by remote processing devices that are linked through a communications network. In a distributed cloud computing environment, program modules may be located in both local and remote computer system storage media including memory storage devices.

As shown in FIG. 4 the computer system 100 has one or more central processing units (CPU(s)) 101a, 101b, 101c, etc., (collectively or generically referred to as processor(s) 101). The processors 101 can be a single-core processor, multi-core processor, computing cluster, or any number of other configurations. The processors 101, also referred to as processing circuits, are coupled via a system bus 102 to a system memory 103 and various other components. The system memory 103 can include a read only memory (ROM) 104 and a random access memory (RAM) 105. The ROM 104 is coupled to the system bus 102 and may include a basic input/output system (BIOS) or its successors like Unified Extensible Firmware Interface (UEFI), which controls certain basic functions of the computer system 100. The RAM is read-write memory coupled to the system bus 102 for use by the processors 101. The system memory 103 provides temporary memory space for operations of said instructions during operation. The system memory 103 can include random access memory (RAM), read only memory, flash memory, or any other suitable memory systems.

The computer system 100 comprises an input/output (I/O) adapter 106 and a communications adapter 107 coupled to the system bus 102. The I/O adapter 106 may be a small computer system interface (SCSI) adapter that communicates with a hard disk 108 and/or any other similar component. The I/O adapter 106 and the hard disk 108 are collectively referred to herein as a mass storage 110.

Software 111 for execution on the computer system 100 may be stored in the mass storage 110. The mass storage 110 is an example of a tangible storage medium readable by the processors 101, where the software 111 is stored as instructions for execution by the processors 101 to cause the computer system 100 to operate, such as is described herein below with respect to the various Figures. Examples of computer program product and the execution of such instruction is discussed herein in more detail. The communications adapter 107 interconnects the system bus 102 with a network 112, which may be an outside network, enabling the computer system 100 to communicate with other such systems. In one embodiment, a portion of the system memory 103 and the mass storage 110 collectively store an operating system, which may be any appropriate operating system to coordinate the functions of the various components shown in FIG. 4.

Additional input/output devices are shown as connected to the system bus 102 via a display adapter 115 and an interface adapter 116. In one embodiment, the adapters 106, 107, 115, and 116 may be connected to one or more I/O buses that are connected to the system bus 102 via an intermediate bus bridge (not shown). A display 119 (e.g., a screen or a display monitor) is connected to the system bus 102 by the display adapter 115, which may include a graphics controller to improve the performance of graphics intensive applications and a video controller. A keyboard 121, a mouse 122, a speaker 123, a microphone 124, etc., can be interconnected to the system bus 102 via the interface adapter 116, which may include, for example, a Super I/O chip integrating multiple device adapters into a single integrated circuit. Suitable I/O buses for connecting peripheral devices such as hard disk controllers, network adapters, and graphics adapters typically include common protocols, such as the Peripheral Component Interconnect (PCI) and the Peripheral Component Interconnect Express (PCIe). Thus, as configured in FIG. 4, the computer system 100 includes processing capability in the form of the processors 101, storage capability including the system memory 103 and the mass storage 110, input means such as the keyboard 121, the mouse 122, and the microphone 124, and output capability including the speaker 123 and the display 119.

In some embodiments, the communications adapter 107 can transmit data using any suitable interface or protocol, such as the internet small computer system interface, among others. The network 112 may be a cellular network, a radio network, a wide area network (WAN), a local area network (LAN), or the Internet, among others. An external computing device may connect to the computer system 100 through the network 112. In some examples, an external computing device may be an external webserver or a cloud computing node.

It is to be understood that the block diagram of FIG. 4 is not intended to indicate that the computer system 100 is to include all of the components shown in FIG. 4. Rather, the computer system 100 can include any appropriate fewer or additional components not illustrated in FIG. 4 (e.g., additional memory components, embedded controllers, modules, additional network interfaces, etc.). Further, the embodiments described herein with respect to computer system 100 may be implemented with any appropriate logic, wherein the logic, as referred to herein, can include any suitable hardware (e.g., a processor, an embedded controller, or an application specific integrated circuit, among others), software (e.g., an application, among others), firmware, or any suitable combination of hardware, software, and firmware, in various embodiments.

While the disclosure has been described with reference to various embodiments, it will be understood by those skilled in the art that changes may be made and equivalents may be substituted for elements thereof without departing from its scope. The various tasks and process steps described herein can be incorporated into a more comprehensive procedure or process having additional steps or functionality not described in detail herein. In addition, many modifications may be made to adapt a particular situation or material to the teachings of the disclosure without departing from the essential scope thereof. Therefore, it is intended that the present disclosure not be limited to the particular embodiments disclosed, but will include all embodiments falling within the scope thereof.

Unless defined otherwise, technical and scientific terms used herein have the same meaning as is commonly understood by one of skill in the art to which this disclosure belongs.

Various embodiments of the invention are described herein with reference to the related drawings. The drawings depicted herein are illustrative. There can be many variations to the diagrams and/or the steps (or operations) described therein without departing from the spirit of the disclosure. For instance, the actions can be performed in a differing order or actions can be added, deleted or modified. All of these variations are considered a part of the present disclosure.

The terminology used herein is for the purpose of describing particular embodiments only and is not intended to be limiting. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, element components, and/or groups thereof. The term "or" means "and/or" unless clearly indicated otherwise by context.

The terms "received from", "receiving from", "passed to", "passing to", etc. describe a communication path between two elements and does not imply a direct connection between the elements with no intervening elements/connections therebetween unless specified. A respective communication path can be a direct or indirect communication path.

The corresponding structures, materials, acts, and equivalents of all means or step plus function elements in the claims below are intended to include any structure, material, or act for performing the function in combination with other claimed elements as specifically claimed.

For the sake of brevity, conventional techniques related to making and using aspects of the invention may or may not be described in detail herein. In particular, various aspects of computing systems and specific computer programs to implement the various technical features described herein are well known. Accordingly, in the interest of brevity, many conventional implementation details are only mentioned briefly herein or are omitted entirely without providing the well-known system and/or process details.

The present invention may be a system, a method, and/or a computer program product at any possible technical detail level of integration. The computer program product may include a computer readable storage medium (or media) having computer readable program instructions thereon for causing a processor to carry out aspects of the present invention.

Various embodiments are described herein with reference to flowchart illustrations and/or block diagrams of methods, apparatus (systems), and computer program products. It will be understood that each block of the flowchart illustrations and/or block diagrams, and combinations of blocks in the flowchart illustrations and/or block diagrams, can be implemented by computer readable program instructions.

These computer readable program instructions may be provided to a processor of a general purpose computer, special purpose computer, or other programmable data processing apparatus to produce a machine, such that the instructions, which execute via the processor of the computer or other programmable data processing apparatus, create means for implementing the functions/acts specified in the flowchart and/or block diagram block or blocks. These computer readable program instructions may also be stored in a computer readable storage medium that can direct a computer, a programmable data processing apparatus, and/or other devices to function in a particular manner, such that the computer readable storage medium having instructions stored therein comprises an article of manufacture including instructions which implement aspects of the function/act specified in the flowchart and/or block diagram block or blocks.

The computer readable program instructions may also be loaded onto a computer, other programmable data processing apparatus, or other device to cause a series of operational steps to be performed on the computer, other programmable apparatus or other device to produce a computer implemented process, such that the instructions which execute on the computer, other programmable apparatus, or other device implement the functions/acts specified in the flowchart and/or block diagram block or blocks.

The flowchart and block diagrams in the figures illustrate the architecture, functionality, and operation of possible implementations of systems, methods, and computer program products according to various embodiments of the present invention. In this regard, each block in the flowchart or block diagrams may represent a module, segment, or portion of instructions, which comprises one or more executable instructions for implementing the specified logical function(s). In some alternative implementations, the functions noted in the blocks may occur out of the order noted in the figures. For example, two blocks shown in succession may, in fact, be executed substantially concurrently, or the blocks may sometimes be executed in the reverse order, depending upon the functionality involved. It will also be noted that each block of the block diagrams and/or flowchart illustration, and combinations of blocks in the block diagrams and/or flowchart illustration, can be implemented by special purpose hardware-based systems that perform the specified functions or acts or carry out combinations of special purpose hardware and computer instructions.

The descriptions of the various embodiments described herein have been presented for purposes of illustration, but are not intended to be exhaustive or limited to the form(s) disclosed. The embodiments were chosen and described in order to best explain the principles of the disclosure. Many modifications and variations will be apparent to those of ordinary skill in the art without departing from the scope and spirit of the described embodiments. The terminology used herein was chosen to best explain the principles of the various embodiments, the practical application or technical improvement over technologies found in the marketplace, or to enable others of ordinary skill in the art to understand the embodiments described herein.

Aspects of the disclosure include a method for determining and correcting an error in measurement outcomes from a quantum circuit. Aspects include receiving, from the quantum circuit, output of the measurement outcomes for a four-dimensional (4D) toric code and determining a flux loop from the measurement outcomes, where the flux loop corresponds to a 4D torus. Aspects include transforming the flux loop into a 4D covering space by fixing a base point of the flux loop in the 4D covering space, where a 4D bounding box is generated that encloses the flux loop in 4D covering space. Aspects include shrinking the 4D bounding box enclosing the flux loop by decreasing a size of the bounding box, where the shrinking continues until the 4D bounding box surrounds a single plaquette, where a pattern of errors correspond to the single plaquette. The pattern of errors corresponding to the single plaquette is corrected.

In an example, there is provided a method for determining and correcting an error in measurement outcomes from a quantum circuit, the method comprising: receiving, from the quantum circuit, output of the measurement outcomes for a four-dimensional (4D) toric code; determining a flux loop from the measurement outcomes, wherein the flux loop corresponds to a 4D torus; transforming the flux loop to a 4D covering space by fixing a base point of the flux loop in the 4D covering space, wherein a 4D bounding box is generated that encloses the flux loop in the 4D covering space; shrinking the 4D bounding box enclosing the flux loop by decreasing a size of the bounding box, wherein the shrinking continues until the 4D bounding box surrounds a single plaquette, wherein a pattern of errors correspond to the single plaquette; and correcting the pattern of errors corresponding to the single plaquette.

In an example, a measurement error of the measurement outcomes is corrected.

In an example, the method further comprises, in response to the flux loop initially being a loop segment that does not close the flux loop because of a measurement error, finding a 1-chain to denote edges of the loop segment; with the edges of the loop segment known, connecting a placeholder loop segment to the edges of the loop segment in order to close the flux loop, wherein the placeholder loop segment is created by constructing a 1-cyle denoting a boundary of the flux loop that is closed; and correcting the measurement error by applying a 2-chain to the flux loop.

In an example, the shrinking of the 4D bounding box enclosing the flux loop comprises continuously moving a boundary plane of the 4D bounding box to intersect the flux loop and applying a correction at an intersection of the boundary plane and the flux loop.

In an example, a plaquette is found at the boundary plane; and the correction includes changing a state of a qubit of the plaquette.

In an example, the single plaquette has a qubit; and the pattern of errors is a qubit error.

In an example, correcting the pattern of errors corresponding to the single plaquette comprises causing a state of the qubit on the quantum circuit to change.

In an example, there is provided a system comprising: a classical computer coupled to a quantum circuit comprising a plurality of qubits, wherein the classical computer comprises a memory, computer readable instructions, and a processor for executing the computer readable instructions, the computer readable instructions controlling the processor to perform operations comprising: receiving, from the quantum circuit, output of measurement outcomes for a four-dimensional (4D) toric code; determining a flux loop from the measurement outcomes, wherein the flux loop corresponds to a 4D torus; transform the flux loop to a 4D covering space by fixing a base point of the flux loop in the 4D covering space, wherein a 4D bounding box is generated that encloses the flux loop in the 4D covering space; shrinking the 4D bounding box enclosing the flux loop by decreasing a size of the bounding box, wherein the shrinking continues until the 4D bounding box surrounds a single plaquette, wherein a pattern of errors correspond to the single plaquette; and correcting the pattern of errors corresponding to the single plaquette.

In an example, a measurement error of the measurement outcomes is corrected.

In an example, the operations further comprise, in response to the flux loop initially being a loop segment that does not close the flux loop because of a measurement error, finding a 1-chain to denote edges of the loop segment; with the edges of the loop segment known, connecting a placeholder loop segment to the edges of the loop segment in order to close the flux loop, wherein the placeholder loop segment is created by constructing a 1-cyle denoting a boundary of the flux loop that is closed; and correcting the measurement error by applying a 2-chain to the flux loop.

In an example, the shrinking of the 4D bounding box enclosing the flux loop comprises continuously moving a boundary plane of the 4D bounding box to intersect the flux loop and applying a correction at an intersection of the boundary plane and the flux loop.

In an example, a plaquette is found at the boundary plane; and the correction includes changing a state of a qubit of the plaquette.

In an example, the single plaquette has a qubit; and the pattern of errors is a qubit error.

In an example, correcting the pattern of errors corresponding to the single plaquette comprises causing a state of the qubit on the quantum circuit to change.

In an example, there is provided a method for determining and correcting an error in measurement outcomes from a quantum circuit, the method comprising: receiving, from the quantum circuit, output of the measurement outcomes for a four-dimensional (4D) toric code; performing a recursive routine to decode the 4D toric code by searching for elementary faults in the measurement outcomes, where a stabilizer violation corresponds to each of the elementary faults, wherein the recursive routine comprises: storing a pattern of violated stabilizers found in the measurement outcomes, wherein a first array comprises an entry for each of the elementary faults, wherein the entry indicates the pattern of violated stabilizers caused by a given elementary fault of the elementary faults, wherein a second array comprises a fixing pattern to fix the given elementary fault; searching for patterns of the elementary faults in the measurement outcomes up to a maximum depth, wherein the maximum depth is a total weight plus one, wherein the searching is performed for the patterns of the elementary faults having a fault number greater than a starting fault number; determining a given pattern of the elementary faults in the measurement outcomes as the given elementary fault; and decoding the given elementary fault for the measurement outcomes by finding in the second array the fixing pattern to fix the given elementary fault; and causing the given elementary fault to be fixed.

In an example, a weight maximum indicates a maximum possible weight of the elementary faults to be searched for.

In an example, the second array comprises fixing patterns for all of the elementary faults.

In an example, the patterns of the elementary faults are stored as a tree graph that can be searched, the tree graph comprising branches of the elementary faults; and a branch of the tree graph has a weight that denotes a number of syndrome bits that are able to be decoded.

In an example, the recursive routine continues searching until a successful decoding is found on the branches of the tree graph or until a weight maximum is reached.

In an example, the given elementary fault is a qubit error associated with one or more qubits on the quantum circuit; and causing the given elementary fault to be fixed comprises changing a state of the one or more qubits on the quantum circuit.

## Claims

1. A method (600) for determining and correcting an error in measurement outcomes from a quantum circuit (12), the method (600) comprising:
receiving (602), from the quantum circuit (12), output of the measurement outcomes for a four-dimensional (4D) toric code;
determining (606) a flux loop (702, 704, 810) from the measurement outcomes, wherein the flux loop (702, 704, 810) corresponds to a 4D torus;
transforming (608) the flux loop (702, 704, 810) to a 4D covering space by fixing a base point of the flux loop in the 4D covering space, wherein a 4D bounding box (902, 904, 952) is generated (610) that encloses the flux loop in the 4D covering space;
shrinking (612) the 4D bounding box (902, 904, 954) enclosing the flux loop by decreasing a size of the bounding box, wherein the shrinking continues until the 4D bounding box surrounds a single plaquette, wherein a pattern of errors correspond to the single plaquette; and
correcting (614, 616) the pattern of errors corresponding to the single plaquette.

2. The method of claim 1, further comprising, in response to the flux loop initially being a loop segment that does not close the flux loop because of a measurement error, finding a 1-chain to denote edges of the loop segment;
with the edges of the loop segment known, connecting a placeholder loop segment to the edges of the loop segment in order to close the flux loop, wherein the placeholder loop segment is created by constructing a 1-cyle denoting a boundary of the flux loop that is closed; and
correcting the measurement error by applying a 2-chain to the flux loop.

3. The method of any preceding claim, wherein the shrinking of the 4D bounding box enclosing the flux loop comprises continuously moving a boundary plane of the 4D bounding box to intersect the flux loop and applying a correction at an intersection of the boundary plane and the flux loop.

4. The method of claim 3, wherein:
a plaquette is found at the boundary plane; and
the correction includes changing a state of a qubit of the plaquette.

5. The method of any preceding claim, wherein:
the single plaquette has a qubit; and
the pattern of errors is a qubit error.

6. The method of claim 5, wherein correcting the pattern of errors corresponding to the single plaquette comprises causing a state of the qubit on the quantum circuit to change.

7. A system comprising:
a classical computer (100) coupled to a quantum circuit (12) comprising a plurality of qubits (14), wherein the classical computer (100) comprises a memory (110, 103), computer readable instructions (111, 130), and a processor (20A, 101) for executing the computer readable instructions, the computer readable instructions controlling the processor to perform operations (600) comprising:
receiving (602), from the quantum circuit (12), output of measurement outcomes for a four-dimensional (4D) toric code;
determining (606) a flux loop (702, 704, 810) from the measurement outcomes, wherein the flux loop (702, 704, 810) corresponds to a 4D torus;
transform (608) the flux loop (702, 704, 810) to a 4D covering space by fixing a base point of the flux loop in the 4D covering space, wherein a 4D bounding box (902, 904, 952) is generated (610) that encloses the flux loop in the 4D covering space;
shrinking (612) the 4D bounding box (902, 904, 954) enclosing the flux loop by decreasing a size of the bounding box, wherein the shrinking continues until the 4D bounding box surrounds a single plaquette, wherein a pattern of errors correspond to the single plaquette; and
correcting (614, 616) the pattern of errors corresponding to the single plaquette.

8. The method of any of claims 1 to 6 or the system of claim 7, wherein a measurement error of the measurement outcomes is corrected.

9. The system of claims 7 or 8, wherein the computer readable instructions control the processor to perform operations further comprising the method of any of claims 2 to 6.

10. A method (500) for determining and correcting an error in measurement outcomes from a quantum circuit (12), the method (500) comprising:
receiving (502), from the quantum circuit (12), output of the measurement outcomes for a four-dimensional (4D) toric code;
performing (504) a recursive routine to decode the 4D toric code by searching for elementary faults in the measurement outcomes, where a stabilizer violation corresponds to each of the elementary faults, wherein the recursive routine comprises:
storing (506) a pattern of violated stabilizers found in the measurement outcomes, wherein a first array (132) comprises an entry for each of the elementary faults, wherein the entry indicates the pattern of violated stabilizers caused by a given elementary fault of the elementary faults, wherein a second array (132) comprises a fixing pattern to fix the given elementary fault;
searching (508) for patterns of the elementary faults in the measurement outcomes up to a maximum depth, wherein the maximum depth is a total weight plus one, wherein the searching is performed for the patterns of the elementary faults having a fault number greater than a starting fault number;
determining (510) a given pattern of the elementary faults in the measurement outcomes as the given elementary fault; and
decoding (512) the given elementary fault for the measurement outcomes by finding in the second array the fixing pattern to fix the given elementary fault; and
causing (514) the given elementary fault to be fixed.

11. The method of claim 10, wherein a weight maximum indicates a maximum possible weight of the elementary faults to be searched for.

12. The method of claims 10 or 11, wherein the second array comprises fixing patterns for all of the elementary faults.

13. The method of any of claims 10 to 12, wherein:
the patterns of the elementary faults are stored as a tree graph that can be searched, the tree graph comprising branches of the elementary faults; and
a branch of the tree graph has a weight that denotes a number of syndrome bits that are able to be decoded.

14. The method of claim 13, wherein the recursive routine continues searching until a successful decoding is found on the branches of the tree graph or until a weight maximum is reached.

15. The method of any of claims 10 to 14, wherein:
the given elementary fault is a qubit error associated with one or more qubits on the quantum circuit; and
causing the given elementary fault to be fixed comprises changing a state of the one or more qubits on the quantum circuit.
